# EUROPEAN PATENT SPECIFICATION

(11) **EP 4 092 332 B1**
(45) Date of publication and mention of the grant of the patent: **03.04.2024**
(21) Application number: 22158438.6
(22) Date of filing: 24.02.2022
(51) Int. Cl.: F24C 15/20, B01D 46/88

(54) **PORTABLE HOOD**
TRAGBARE ABZUGSHAUBE
HOTTE PORTATIVE

(30) Priority: 21.05.2021 KR 20210065560
(43) Date of publication of application: 23.11.2022
(73) Proprietor: LG Electronics Inc., Yeongdeungpo-gu Seoul 07336 (KR)
(72) Inventor: LEE, Deukwon, Seoul (KR); JO, Yu Na, Seoul (KR); LEE, Taeyun, Seoul (KR); LEE, Sang Yoon, Seoul (KR); OH, Min Kyu, Seoul (KR)
(74) Representative: Vossius & Partner Patentanwälte Rechtsanwälte mbB

(56) References cited:
- FR-A1- 2 761 620
- KR-A- 20170 105 333
- KR-A- 20220 018 280
- US-A1- 2002 088 211
- US-A1- 2021 121 816

## Description

### BACKGROUND OF THE INVENTION

### Field of the Invention

The present disclosure relates generally to a portable hood. More particularly, the present disclosure relates to a portable hood which is used while food is cooked.

### Description of the Related Art

Generally, a hood is installed above a heating appliance for cooking such as a gas stove or induction cooker, and draws odors, water vapor, oil vapor, or fine dust thereto (hereinafter, referred to as "oil vapor") which is generated during the cooking of food by the heating appliance for cooking and discharges it to the outside. The installation position of the heating appliance for cooking such as a gas stove or induction cooker is fixed, so the installation position of the hood installed above the heating appliance for cooking is also generally fixed.

As described above, a fixing hood installed above the heating appliance for cooking is generally installed at a position somewhat higher than the heating appliance for a kitchen structure or the convenience of cooking. Accordingly, a distance between an actual cooking location and the sucking unit of the fixing hood is far, so oil vapor generated during cooking may not all be removed through the hood.

Accordingly, the oil vapor not removed by the hood flows into a room and causes odor or causes stains on a wall or furniture by being attached thereto.

In addition, the existing fixing hood can be used in a fixed heating appliance such as a gas stove or induction cooker but cannot be used when meat is grilled by a portable burner placed on a dining table or at living room, or when cooking is performed outdoors as in camping.

US 2021/121816 A1 relates to an air cleaner with user interface. US 2002/088211 A1 relates to a free-standing, smoke and fume filtering device for use in connection with indoor grills and rotisseries. Document FR2761620 A1 discloses a prtable hood. Document KR10-2017-0105333 discloses an air purifier whereby the used filter sheets are removed from the top of the device.

### SUMMARY OF THE INVENTION

The invention is defined by independent claim 1. Further embodiments of the invention are defined by the dependent claims.

Accordingly, the present disclosure has been made keeping in mind the above problems occurring in the related art, and the present disclosure is intended to propose a portable hood which is changeable in an installation position.

In addition, the present disclosure is proposes a portable hood in which a purification filter, for example, an oil mist filter is installed to have a shape of a roll filter such that cleanliness maintenance and replacement of the purification filter are easy.

Furthermore, the present disclosure is intended to propose a portable hood which draws oil vapor generated during cooking thereto at a position adjacent to an upper part of a cooking utensil such as a pot such that the efficiency of drawing the oil vapor is increased.

Additionally, the present disclosure is intended to propose a portable hood in which a sucking unit is adjusted such that the sucking unit is placed above a cooking utensil according to the height or position of the cooking utensil.

In addition, the present disclosure is intended to propose a portable hood which is prevented from tipping over during use such that stable cooking can be performed.

Furthermore, the present disclosure is intended to propose a portable hood in which oil vapor is prevented from bypassing the sucking unit without being introduced to the sucking unit.

Additionally, the present disclosure is intended to propose a portable hood in which oil vapor is introduced through the sucking unit and discharged upward such that the oil vapor is efficiently removed through the cooperation of the portable hood with a fixing hood installed in a kitchen.

In addition, the present disclosure is intended to propose a portable hood in which main components are easily disassembled and then are washed such that the cleanliness of the main components is maintained.

Furthermore, the present disclosure is intended to propose a portable hood which in addition to a function of removing oil vapor during cooking, has an air cleaning function.

In order to achieve the above objectives, a portable hood according to the embodiment of the present disclosure may include a base unit, a head unit, a columnar unit, and a roll filter unit.

The base unit according to the embodiment of the present disclosure sits on a foundation, and the columnar unit may connect the head unit with the base unit such that the head unit is spaced apart upward from the base unit.

The head unit according to the invention includes a sucking unit allowing air to be introduced thereto and a discharging unit discharging the air introduced to the sucking unit to the outside.

The roll filter unit according to the invention includes a purification filter in the head unit and capable to be discharged past the sucking unit to the outside of the head unit.

The roll filter unit according to the invention includes a filter roll and a filter transportation unit.

The filter roll according to the invention is installed rotatably at the head unit, with the purification filter wound on the filter roll.

The filter transportation unit according to the invention is installed in the head unit such that the filter transportation unit is located at a side opposite to the filter roll with the sucking unit placed between the filter transportation unit and the filter roll. Additionally, the filter transportation unit allows the purification filter extending past the sucking unit from the filter roll to be discharged to the outside of the head unit.

In the embodiment of the present disclosure, the head unit may include a roll mounting portion to which the filter roll is removably mounted.

Here, the roll mounting portion may include a roll accommodation portion and a shaft combination portion.

The roll accommodation portion according to the embodiment of the present disclosure may be open at a lower surface of the head unit, so the filter roll may be inserted into the roll accommodation portion. Furthermore, the shaft combination portion may be formed at each of the opposite inner wall surfaces of the roll accommodation portion.

The filter roll according to the embodiment of the present disclosure may include a filter drum and a pair of roll combination kits.

Here, the purification filter may be wound on the filter drum. Furthermore, the roll combination kits may be installed at the opposite sides of the filter drum, respectively, and may support the filter drum such that the filter drum is rotatable. In addition, when the filter roll is installed in the roll mounting portion, each of the roll combination kits may be removably coupled to the shaft combination portion.

In the embodiment of the present disclosure, the roll coupling kit may include a kit main body, a first shaft protrusion, and the second shaft protrusion.

The first shaft protrusion according to the embodiment of the present disclosure may be rotatably coupled to the side surface of the filter drum by protruding from a first side surface of the kit main body.

The second shaft protrusion according to the embodiment of the present disclosure may be inserted into the shaft combination portion by protruding from a second side surface of the kit main body.

Here, in the embodiment of the present disclosure, when the second shaft protrusion is coupled to the shaft combination portion, the second shaft protrusion may be pressed in a direction of the second shaft protrusion inserted into the shaft combination portion.

To this end, the kit main body according to the embodiment of the present disclosure may include a first kit member, a second kit member, and a pressing member.

The second kit member according to the embodiment of the present disclosure may include the second shaft protrusion and may be movably coupled to the first kit member. Furthermore, the pressing member may be installed between the first kit member and the second kit member and may press the second kit member in the inserting direction of the second shaft protrusion to the shaft combination portion. Accordingly, the second kit member of each kit main body may be pushed in a direction toward the first kit member, so that the second shaft protrusion may be coupled to or decoupled from the shaft combination portion.

In the embodiment of the present disclosure, the filter transportation unit may discharge the purification filter extending past the sucking unit from the filter roll to the upper side of the head unit.

The filter transportation unit according to the embodiment of the present disclosure may include a first roller unit and a second roller unit. Here, the first roller unit and the second roller unit may be installed in the head unit by being spaced vertically apart from each other and may discharge the purification filter in an upward direction.

Here, each of the first roller unit and the second roller unit may include the first transportation roller and the second transportation roller configured to rotate by facing each other in a horizontal direction with the purification filter placed between the first transportation roller and the second transportation roller so as to move the purification filter upward.

The filter transportation unit according to the embodiment of the present disclosure may further include a cutting unit located between the first roller unit and the second roller unit so as to cut the purification filter in a transverse direction.

In the embodiment of the present disclosure, the cutting unit may include a cutter and a cutter moving unit.

Here, the cutter may cut the purification filter. Furthermore, the cutter moving unit may reciprocate the cutter in a transverse direction and may cut the purification filter in the transverse direction.

In the embodiment of the present disclosure, the cutter moving unit may include a belt at which the cutter is installed, and a pair of pulleys configured to perform forward and reverse rotations such that the cutter installed at the belt reciprocates.

The head unit according to the embodiment of the present disclosure may include a head main body and a flow-path portion.

Here, the sucking unit, the discharging unit, and the roll mounting portion may be formed in the head main body. Furthermore, the sucking unit and the discharging unit may be formed eccentrically in a horizontal direction.

The flow-path portion according to the embodiment of the present disclosure may be provided in the head main body and may have a flow path formed therein such that air introduced through the sucking unit flows to the discharging unit.

With the sucking unit placed between the filter roll and the filter transportation unit, the filter roll and the filter transportation unit according to the embodiment of the present disclosure may be installed at the opposite sides, respectively, of the eccentric direction of the sucking unit and the discharging unit. In this case, the filter roll may be installed at a side of the discharging unit.

The filter roll according to the embodiment of the present disclosure may be mounted in the roll mounting portion such that the purification filter is unwound in a direction covering the lower part of the head main body and extends to the lower part of the sucking unit. Furthermore, the purification filter may bend upward after moving past the sucking unit and may move to the filter transportation unit.

The head main body according to the embodiment of the present disclosure may include a casing main body, an upper casing, and a lower casing.

The sucking unit and the roll mounting portion may be formed at the casing main body according to the embodiment of the present disclosure, and the filter transportation unit may be installed in the casing main body.

The upper casing according to the embodiment of the present disclosure may include the discharging unit formed therein and may be coupled to the casing main body from the upper side of the casing main body. Furthermore, the lower casing may include a through hole formed vertically therethrough such that the through hole is located at a position corresponding to the sucking unit. The lower casing may be coupled to the casing main body from the lower side of the casing main body so as to shield the roll mounting portion.

The casing main body according to the embodiment of the present disclosure may include a first casing main body and a second casing main body.

The sucking unit and the roll mounting portion may be formed in the first casing main body according to the embodiment of the present disclosure. Furthermore, the second casing main body may be coupled to the first casing main body by a vertical hinge such that the first casing main body is opened and closed in a horizontal direction.

Here, the first transportation roller may be installed in the first casing main body, and the second transportation roller may be installed in the second casing main body. In this case, when the second casing main body closes the first casing main body, the purification filter may be fitted between the first transportation roller and the second transportation roller.

The upper casing according to the embodiment of the present disclosure may have a filter discharging hole formed vertically therethrough such that the purification filter moved upward by the filter transportation unit passes through the filter discharging hole.

Here, the filter discharging hole may have an inclined surface formed at an inner wall surface thereof by inclining toward the discharging unit such that the purification filter is discharged to the discharging unit.

In the embodiment of the present disclosure, the purification filter may include an oil mist filter.

The portable hood according to the present disclosure may have at least one following effect.

First and according to the invention, one of the purification filters is provided as a roll filter, and thus the cleanliness maintenance and replacement of the purification filter, for example, oil mist filter, may be easy

Particularly, the lower casing may be removed from the casing main body, thereby facilitating the replacement of the oil mist filter provided as the roll filter through a hinged coupling between the first casing main body and the second casing main body.

Second, the sucking unit and the discharging unit may be formed at eccentric positions in a horizontal direction, thereby removing the bypassing of air occurring when the sucking unit and the discharging unit are positioned on the same axis in a vertical direction and improving the efficiency of drawing and discharging air.

Third, the sucking unit and the discharging unit may be formed at eccentric positions in a horizontal direction, the flow of air introduced to the sucking unit and the flow of air discharged from the discharging unit may not affect each other, thereby improving the efficiency of drawing and discharging air.

Fourth, the head unit may be provided to rotate horizontally relative to the base unit, and the sucking unit may be adjusted to be located adjacently to the upper portion of a cooking utensil according to a cooking environment such as the position of a burner being used. Accordingly, the portable hood may draw oil vapor thereto at the position adjacent to the upper portion of the cooking utensil, thereby increasing the efficiency of drawing the oil vapor.

Fifth, the discharging unit may be configured to discharge oil vapor in an upward direction, and the oil vapor may be discharged in a direction toward a fixing hood, thereby effectively removing the oil vapor generated during cooking in cooperation with the fixing hood.

Sixth, disassembling of the head unit may be easy, thereby facilitating the washing and replacement of the discharging fan, the flow-path portion, and the purification filter such as the deodorization filter installed in the head unit.

Seventh, the discharging fan and the fan motor may be installed at the upper side of the columnar unit, and thus the center of weight of the portable hood may be formed at the columnar unit on which the discharging unit is formed, and thus the center of the weight of the portable hood may be located at the columnar unit despite the horizontal rotation of the sucking unit of the head unit, thereby preventing the tipping over of the portable hood.

Eighth, the fan motor configured to rotate the discharging fan may be located under a flow path in which oil vapor flows, thereby preventing the contamination of the fan motor due to the oil vapor. Furthermore, due to the prevention of the contamination of the fan motor, the fan motor may not be required to be disassembled during the dissembling of the portable hood to wash the portable hood, thereby simplifying the disassembling and washing of the portable hood.

Ninth, the head main body may be removed from the casing main body and the upper casing, and the flow-path portion communicating the sucking unit with the discharging unit may be removed from the casing main body, thereby enabling the washing of the flow-path portion in which the oil vapor flows.

Tenth, the fan housing receiving the discharging fan may protrude from the head unit, thereby slimming the entire vertical thickness of the head main body receiving the discharging fan and the fan motor.

Eleventh, an end of the oil mist filter discharged to the upper side of the head unit may be configured to be discharged to the discharging unit located at a side opposite to a burner, thereby preventing accidents which may occur during the discharge of the end of the oil mist filter to the burner.

Twelfth, the head unit may be configured to have adjustable height, thereby effectively drawing and discharging oil vapor according to cooking utensils having various heights without affecting cooking.

Thirteenth, components such as a weight plate and a battery module may be arranged in the base unit or the columnar unit such that the center of weight of the portable hood is located at the columnar unit or a lower portion of the portable hood, thereby enabling the stable standing of the portable hood such that the portable hood is prevented from tipping over.

Fourteenth, the purification filter constituting the filter unit may be replaced, thereby functioning as an air purifier by replacing a purification filter used during cooking with the purification filter for air purification.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view of a portable hood according to an embodiment of the present disclosure;
FIGS. 2A, 2B, and 2C are views illustrating the state of use of the portable hood according to the embodiment of the present disclosure;
FIG. 3 is a sectional view of a head unit taken along line A-A of FIG. 1 according to the embodiment of the present disclosure;
FIG. 4 is a partial exploded perspective view of the portable hood according to the embodiment of the present disclosure;
FIGS. 5 to 11 are views illustrating the configuration of a roll filter unit according to the embodiment of the present disclosure;
FIGS. 12A, 12B, 12C, 12D, 13A, 13B, and 13C are views illustrating a process in which a filter roll is newly mounted in the portable hood according to the embodiment of the present disclosure;
FIG. 14 is a sectional view of a flow-path portion taken along line B-B of FIG. 4 according to the embodiment of the present disclosure;
FIG. 15 is a sectional view illustrating a discharging unit according to the embodiment of the present disclosure;
FIG. 16 is a partial exploded perspective view illustrating a discharging unit according to another embodiment of the present disclosure;
FIGS. 17 and 18 are views illustrating a coupling structure between a discharging fan and a fan motor according to the embodiment of the present disclosure;
FIGS. 19, 20A, and 20B are views illustrating a height adjustment structure of a columnar unit according to the embodiment of the present disclosure;
FIGS. 21 and 22 are views illustrating the configuration of a rotation unit according to the embodiment of the present disclosure;
FIGS. 23 to 25 are views illustrating the configuration of the discharging fan and the fan motor integrated with each other according to the embodiment of the present disclosure;
FIG. 26 is a perspective view illustrating the installed state of a weight plate of the portable hood according to another embodiment of the present disclosure;
FIGS. 27A and 27B are views illustrating the installed state of a battery module of the portable hood according to still another embodiment of the present disclosure;
FIG. 28 is a front view of the portable hood according to the embodiments of the present disclosure; and
FIG. 29 is a view illustrating the state of use of the portable hood according to still another embodiment of the present disclosure.

### DETAILED DESCRIPTION OF THE INVENTION

Advantages and features of the present disclosure and methods of achieving them will become apparent with reference to the embodiments described below in detail in conjunction with the accompanying drawings.

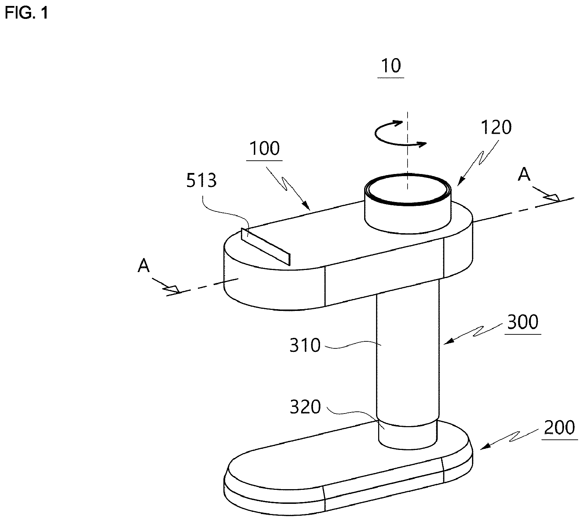

As illustrated in FIG. 1, a portable hood 10 according to the invention includes a head unit 100, a base unit 200, and a columnar unit 300.

The base unit 200 according to the embodiment of the present disclosure sits on a foundation. In the embodiment of the present disclosure, it is exemplified that a shape of the flat surface of the base unit 200 has a shape of an oblong racetrack.

The head unit 100 according to the embodiment of the present disclosure may allow air to be introduced thereto and then may discharge the introduced air. In the present disclosure, the head unit 100 may include a sucking unit 110 and a discharging unit 120.

Air may be introduced to the sucking unit 110 according to the embodiment of the present disclosure. Furthermore, the air introduced into the sucking unit 110 may be discharged through the discharging unit 120 to the outside.

In the embodiment of the present disclosure, as illustrated in FIG. 1, the sucking unit 110 and the discharging unit 120 may be formed eccentrically in a horizontal direction. That is, in the embodiment of the present disclosure, air may be introduced to a side of a horizontal direction relative to the head unit 100 and may be discharged through the discharging unit 120 eccentric from the sucking unit 110 in the horizontal direction.

Through this configuration, bypassing of air occurring when the sucking unit 110 and the discharging unit 120 are located on the same axis in a vertical direction, that is, the flowing of the air in a direction toward the discharging unit 120 along the outside boundary of the head unit 100 due to the failure of the introduction of some of air to the sucking unit 110 due to the flow of air discharged through the discharging unit 120 or cooking heat may be prevented, so the efficiency of drawing air may be improved.

In the embodiment of the present disclosure, for example, the head unit 100 may have an oblong racetrack shape corresponding to the shape of the base unit 200, and the sucking unit 110 may be formed at a first side of the head unit 100 in a horizontal direction which has a shape of the oblong racetrack, and the discharging unit 120 may be formed at a second side thereof.

The columnar unit 300 according to the embodiment of the present disclosure may connect the head unit 100 with the base unit 200 such that the head unit 100 is spaced apart upward from the base unit 200. In the embodiment of the present disclosure, the columnar unit 300 may be eccentrically coupled to the head unit 100 such that the columnar unit 300 is located at a side of the discharging unit 120. In addition, the columnar unit 300 may be rotatably coupled to the base unit 200 such that the sucking unit 110 is rotated horizontally.

Through the above configuration, the head unit 100 may rotate relative to the columnar unit 300 as a shaft of the head unit 100, the columnar unit being coupled to a side of the discharging unit 120, and the sucking unit 110 eccentric from the discharging unit 120 in a horizontal direction may rotate horizontally, so the position of the sucking unit 110 may be adjusted.

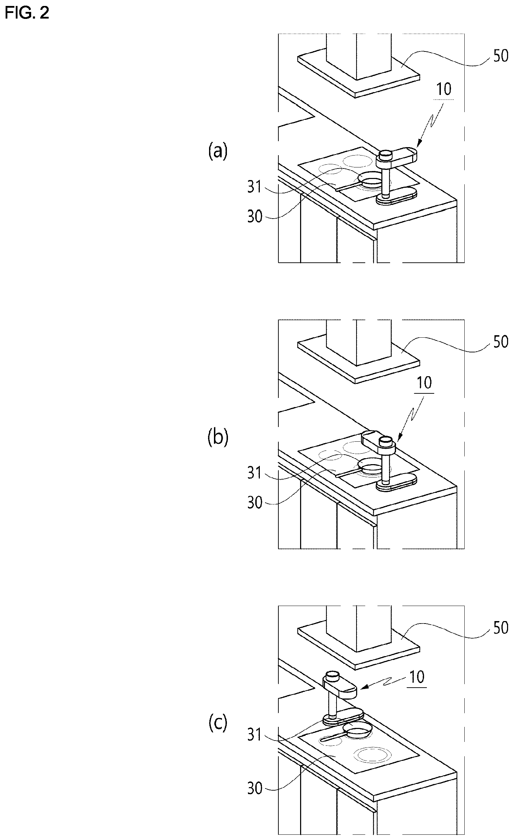

FIGS. 2A, 2B, and 2C are views illustrating the state of use of the portable hood according to the embodiment of the present disclosure. The state of use of the portable hood illustrated in FIGS. 2A, 2B, and 2C illustrates the use of the portable hood in a kitchen to which a fixing hood 50 is fixed in a general household just as an induction cooker is fixed.

Referring to FIGS. 2A, 2B, and 2C, when the portable hood 10 according to the embodiment of the present disclosure is not used, as illustrated in FIG. 2A, the head unit 100 may be rotated such that the head unit 100 and the base unit 200 face each other so as to minimize space occupied by the base unit 200 and the head unit 100.

In addition, as illustrated in FIGS. 2B and 2C, in a state in which the portable hood 10 according to the embodiment of the present disclosure is seated at a left or right side of the heating appliance 30 according to the position of a burner being used among burners of the heating appliance 30 such as an induction cooker, the head unit 100 may be adjusted to be rotated to a left or right direction such that the sucking unit 110 of the head unit 100 is located above a cooking utensil 31 such as a pot.

Accordingly, the sucking unit 110 may be adjusted to be located adjacently to the upper portion of the cooking utensil 31 according to a cooking environment such as the position of the burner being used, and thus oil vapor may be introduced to the sucking unit 110 at the position adjacent to the upper portion of the cooking utensil 31, so the efficiency of drawing oil vapor may be effectively increased.

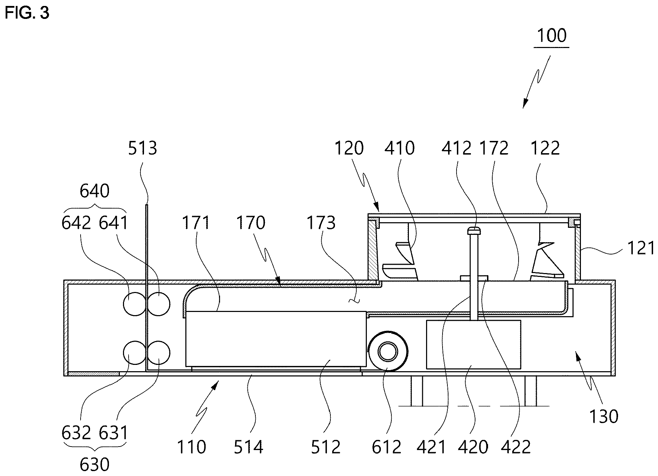

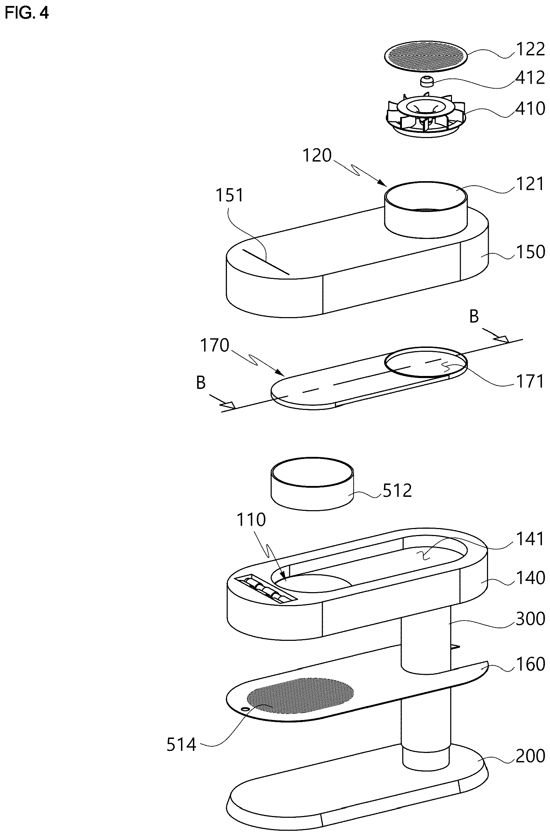

FIG. 3 is a sectional view of the head unit 100 according to the embodiment of the present disclosure, and FIG. 4 is a partial exploded perspective view of the portable hood according to the embodiment of the present disclosure. Referring to FIG. 3, the portable hood according to the embodiment of the present disclosure may further include a filter unit 500.

The filter unit according to the embodiment of the present disclosure may include multiple purification filters 512, 513, and 514. Here, in the embodiment of the present disclosure, one of the multiple purification filters 512, 513, and 514 may be provided in the shape of a roll filter. In the present disclosure, an oil mist filter 513 is configured in the shape of a roll filter. Hereinafter, the oil mist filter 513 configured in the shape of a roll filter will be described. In the embodiment of the present disclosure, as the oil mist filter 513, a fiber filter such as a non-woven fabric is applied.

The portable hood 10 according to the embodiment of the present disclosure may include a roll filter unit 600 enabling the oil mist filter 513 to be discharged past the sucking unit to the outside of the head unit 100 110.

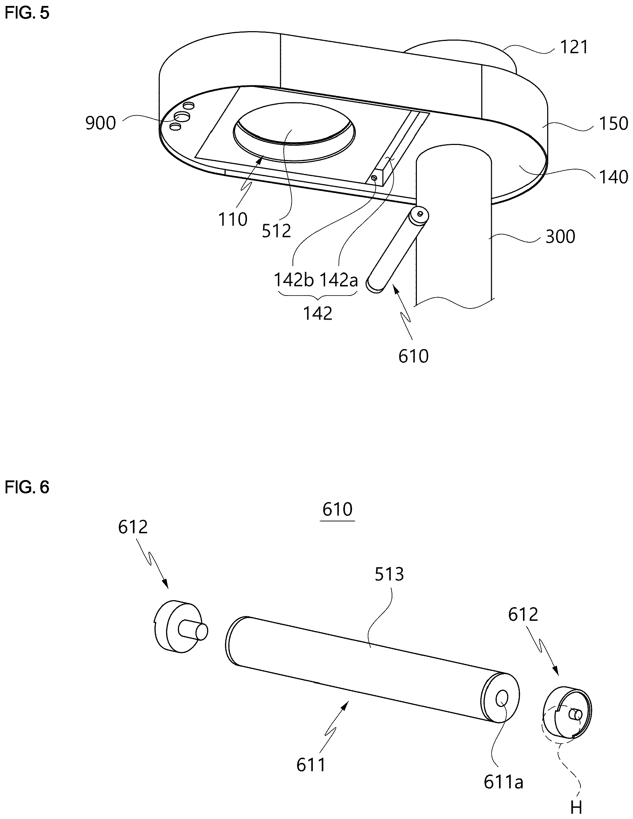

FIGS 5 to 11 are views illustrating the example of the configuration of the roll filter unit 600 according to the embodiment of the present disclosure.

Referring to FIGS 5 to 11, the roll filter unit 600 according to the invention includes a filter roll 610 and the filter transportation unit 620.

The oil mist filter 513 may be wound on the filter roll 610. Here, the filter roll 610 may be rotatably installed at the head unit 100 with the oil mist filter 513 wound on the filter roll 610.

As illustrated in FIG. 4, the head unit 100 according to the embodiment of the present disclosure may include a head main body 130 and a flow-path portion 170. Furthermore, the head main body 130 may include the casing main body 140, an upper casing 150, and a lower casing 160. The head main body 130, the casing main body 140, the upper casing 150, the lower casing 160, and the flow-path portion 170 will be described later.

In the embodiment of the present disclosure, as illustrated in FIG. 5, the filter roll 610 is removably installed at the roll mounting portion 142 formed at the lower portion of the casing main body 140 of the head main body 130.

The roll mounting portion 142 according to the embodiment of the present disclosure may include a roll accommodation portion 142a and a shaft combination portion 142b.

The roll accommodation portion 142a may be open downward at a lower surface of the casing main body 140 such that the filter roll 610 may be inserted into the roll accommodation portion 142a from a lower side of the casing main body 140. Furthermore, the shaft combination portion 142b may be formed at each of the opposite inner wall surfaces of the roll accommodation portion 142a, so a roll coupling kit 612 to be described later of the filter roll 610 may be coupled to the shaft combination portion 142b.

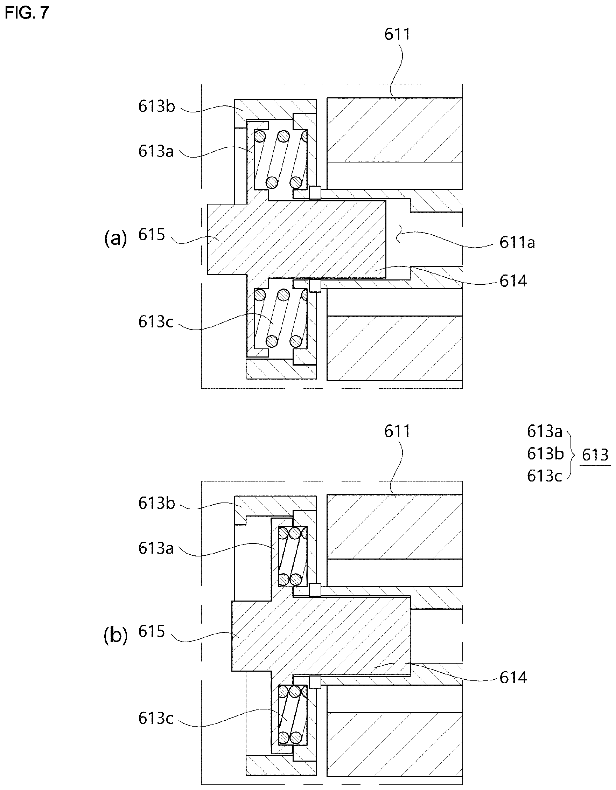

As illustrated in FIGS. 6, 7A, and 7B, the filter roll 610 according to the embodiment of the present disclosure may include a filter drum 611 and the pair of roll combination kits 612.

The filter drum 611 may be provided to have a cylindrical shape, and the oil mist filter 513 may be wound on the filter drum 611 along an outer circumferential surface thereof.

The pair of roll combination kits 612 may be installed at the opposite sides of the filter drum 611, respectively. Here, the pair of roll combination kits 612 may support the filter drum 611 such that the filter drum 611 is rotatable, and when the filter roll 610 is installed in the roll mounting portion 142, the filter roll 610 may be removably coupled to each of the shaft combination portions 142b.

In the embodiment of the present disclosure, as illustrated in FIGS. 7A and 7B, the roll coupling kit 612 may include a kit main body 613, a first shaft protrusion 614, and a second shaft protrusion 615.

The first shaft protrusion 614 according to the embodiment of the present disclosure may be rotatably coupled to the side surface of the filter drum 611 by protruding from a first side surface of the kit main body 613. Here, the protrusion insertion hole 611a may be formed in the side surface of the filter drum 611 such that the first shaft protrusion 614 is rotatably inserted to the protrusion insertion hole 611a.

The second shaft protrusion 615 according to the embodiment of the present disclosure may be inserted to the shaft combination portion 142b of the roll mounting portion 142 by protruding from a second side surface of the kit main body 613. Here, In the embodiment of the present disclosure, when the second shaft protrusion 615 is coupled to the shaft combination portion 142b, the second shaft protrusion 615 may be pressed in a direction of the second shaft protrusion 615 inserted into the shaft combination portion 142b.

In the embodiment, as illustrated in FIGS. 7A and 7B, the kit main body 613 according to the embodiment of the present disclosure may include a first kit member 613a, a second kit member 613b, and a pressing member 613c.

The second shaft protrusion 615 may be provided at the first kit member 613a according to the embodiment of the present disclosure and may be coupled to the first kit member 613a such that the second shaft protrusion 615 moves in a direction of the rotational axis of the filter drum 611. In the embodiment of the present disclosure, the first shaft protrusion 614 and the second shaft protrusion 615 may be formed to be integrated with flat surfaces of the opposite sides of the second kit member 613b, respectively.

The pressing member 613c according to the embodiment of the present disclosure may be installed between the first kit member 613a and the second kit member 613b. Furthermore, the pressing member 613c may press the second kit member 613b in a direction in which the second shaft protrusion 615 is inserted into the shaft combination portion 142b. In the embodiment of the present disclosure, the pressing member 613c may be provided as a compression spring.

Through the above configuration, when installing the filter roll 610 in the roll mounting portion 142, a user may insert the filter roll 610 into the roll accommodation portion 142a. In this state, the user may push a second kit member 613b at a second side in a direction toward the first kit member 613a at the second side after inserting a second shaft protrusion 615 at a first side into the shaft combination portion 142b at the first side such that the second shaft protrusion 615 at the second side is inserted into the shaft combination portion 142b at the second side.

Here, the coupling force of the second shaft protrusion 615 to the shaft combination portion 142b and the coupling force of the first shaft protrusion 614 to the protrusion insertion hole 611a may be maintained constant by an elastic force of the pressing member 613c. Accordingly, when the filter transportation unit 620 moves the oil mist filter 513 wound on the filter roll 610, the filter transportation unit 620 may hold the oil mist filter 513 with tension and may prevent the oil mist filter 513 from being easily unwound.

Here, in the embodiment of the present disclosure, a cut part H may be formed by cutting a portion of an edge of the first kit member 613a directed toward the shaft combination portion 142b and may provide space into which a user can insert a finger to push the second kit member 613b.

Meanwhile, as illustrated in FIG. 3, the filter transportation unit 620 may be installed in the head unit 100 such that the filter transportation unit 620 is located at a side opposite to the filter roll 610 with the sucking unit 110 placed between the filter transportation unit 620 and the filter roll 610. In the embodiment of the present disclosure, the filter roll 610 may be installed inside the casing main body 140 of the head main body 130.

In the embodiment of the present disclosure, with the sucking unit 110 placed between the filter roll 610 and the filter transportation unit 620, the filter roll 610 and the filter transportation unit 620 may be installed at the opposite sides, respectively, of the eccentric direction of the sucking unit 110 and the discharging unit 120. In this case, with the sucking unit 110 placed between the filter transportation unit 620 and the filter roll 610, the filter roll 610 may be installed at a side of the discharging unit 120 and at a side opposite to the filter transportation unit 620.

The filter transportation unit 620 according to the invention discharges the oil mist filter 513 extending past the sucking unit 110 from the filter roll 610 to the outside of the head unit 100. For example, the filter transportation unit 620 may discharge the oil mist filter 513 to the upper side of the head unit 100.

When described in more detail with reference to FIGS. 3, 8, and 9, the filter transportation unit 620 according to the embodiment of the present disclosure may include a first roller unit 630 and a second roller unit 640.

The first roller unit 630 and the second roller unit 640 may be installed in the casing main body 140 by being vertically spaced apart from each other and may discharge the oil mist filter 513 to the upper side of the head unit 100.

For example, the first roller unit 630 and the second roller unit 640 according to the embodiment of the present disclosure may include a first transportation roller 631 and a second transportation roller 632, and a first transportation roller 641 and a second transportation roller 642, respectively. The first transportation rollers 631 and 641 and the second transportation rollers 632 and 642 may rotate by facing each other in a horizontal direction with the oil mist filter 513 placed therebetween, so the oil mist filter 513 may be moved upward.

In the embodiment of the present disclosure, corrugation having a shape of gear teeth may be formed on the outer circumferential surface of each of the first transportation roller 631 or 641 and the second transportation roller 632 or 642 such that the oil mist filter 513 is efficiently moved.

Meanwhile, in the embodiment of the present disclosure, for example, the filter transportation unit 620 may further include a cutting unit 650. For an example, the cutting unit 650 may be located between the first roller unit 630 and the second roller unit 640 and may cut the purification filter 511, 512, 513, or 514 in a transverse direction.

Accordingly, when the filter transportation unit 620 moves the oil mist filter 513 after the portable hood 10 according to the embodiment of the present disclosure is used for a predetermined period of time, a new area of the oil mist filter 513 wound on the filter roll 610 may be moved to the sucking unit 110, and the area of the oil mist filter 513 used earlier may be moved to the outside of the head unit 100 along the filter transportation unit 620.

In this case, when the cutting unit 650 transversely cuts the oil mist filter 513 at a position located between the first roller unit 630 and the second roller unit 640, a user may pull a portion of the oil mist filter 513 exposed to the upper side of the head unit 100 and may remove the exposed portion. Next, when the filter transportation unit 620 moves the oil mist filter 513 again, an end of the oil mist filter 513 may be exposed to the upper side of the head unit 100 as illustrated in FIG. 1. Here, as illustrated in FIG. 1, maintaining the exposure of the end of the oil mist filter 513 to the upper side of the head unit 100 when using the oil mist filter 513 is provided as an example, and the oil mist filter 513 may be controlled to expose an end thereof to the upper side of the head unit 100 only when cutting the end of the oil mist filter 513.

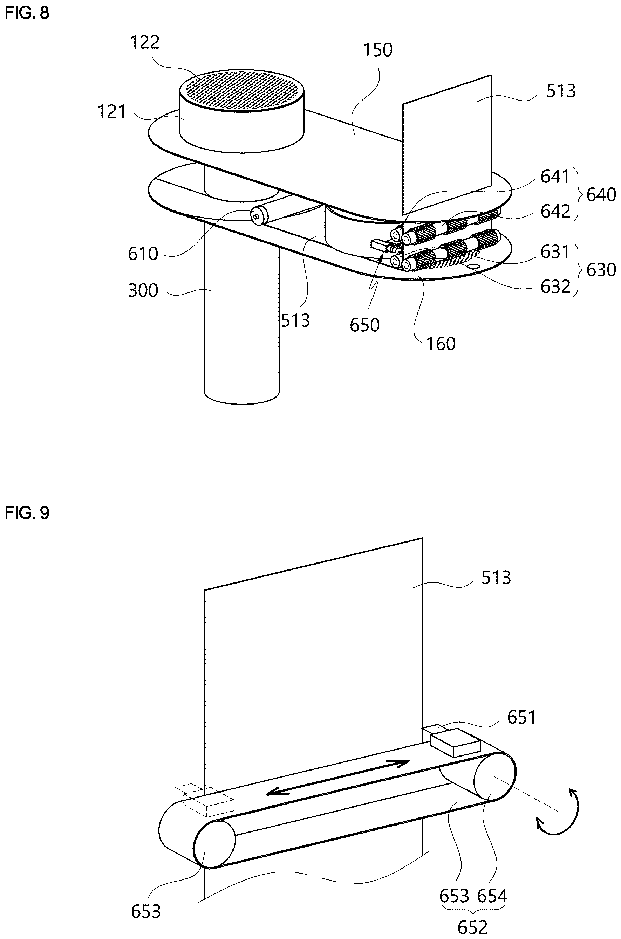

FIG. 9 is a view illustrating the configuration of the cutting unit 650 according to the embodiment of the present disclosure. The cutting unit 650 according to the embodiment of the present disclosure may include a cutter 651 cutting the oil mist filter 513. Furthermore, the cutting unit 650 according to the embodiment of the present disclosure may include a cutter moving unit 652 configured to transversely reciprocate the cutter 651 such that the oil mist filter 513 is transversely cut.

For example, the cutter moving unit 652 may include a belt 653 and a pair of pulleys 654. Here, in a state in which the cutter 651 is installed at the belt 653, when one of the pair of pulleys 654 performs forward and reverse rotations, the cutter 651 installed at the belt 653 may transversely cut the oil mist filter 513 while reciprocating along the belt 653.

Meanwhile, as illustrated in FIG. 3, the filter roll 610 according to the embodiment of the present disclosure may be installed in the roll mounting portion 142 such that the oil mist filter 513 wound on the filter roll 610 is unwound at the lower part of the head main body 130 in a direction covering the lower part of the head main body 130 and extends toward the lower part of the sucking unit 110. Furthermore, the oil mist filter 513 moving past the sucking unit 110 may bend upward and may move to the upper side of the head unit 100 by the filter transportation unit 620. Through this configuration, the oil mist filter 513 unwound from the filter roll 610 may be moved by being bent only in one direction, so the efficient movement of the oil mist filter 513 by the filter transportation unit 620 may be performed.

In addition, the upper casing 150 according to the embodiment of the present disclosure may include a filter discharging hole 151 formed vertically therethrough. Accordingly, the end of the oil mist filter 513 moved by the filter transportation unit 620 may be moved to the upper side of the head unit 100 through the filter discharging hole 151 formed in the upper casing 150 and may be discharged to the outside of the head unit 100.

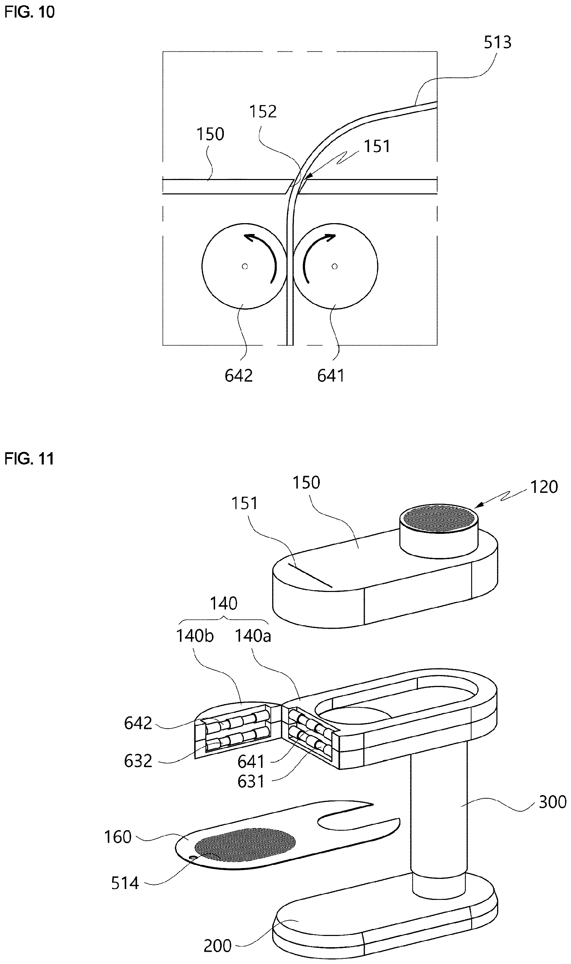

Here, as illustrated in FIG. 10, the filter discharging hole 151 according to the embodiment of the present disclosure may include an inclined surface 152. The inclined surface 152 may be formed on the inner wall surface of the filter discharging hole 151 by inclining toward the discharging unit 120 such that the oil mist filter 513 is discharged toward the discharging unit 120 when the oil mist filter 513 is discharged through the filter discharging hole 151.

Through this configuration, the oil mist filter 513 moved by being unwound from the filter roll 610 may be moved by being bent only in one direction and thus the efficient movement of the oil mist filter 513 may be performed. Additionally, when the oil mist filter 513 is discharged to the upper side of the head unit 100, the oil mist filter 513 may be discharged toward the discharging unit 120 located at a side opposite to a burner, so accidents due to the discharging of the oil mist filter 513 toward the burner may be prevented in advance.

Meanwhile, as illustrated in FIG. 11, for example, the casing main body 140 according to the embodiment of the present disclosure may include a first casing main body 140a and a second casing main body 140b.

The first casing main body 140a according to the embodiment of the present disclosure may constitute a major part of the casing main body 140 according to the embodiment of the present disclosure. For an example, the sucking unit 110 and the roll mounting portion 142 may be formed in the first casing main body 140a. Additionally, the first casing main body 140a may include the flow space 141 formed therein to seat the flow-path portion 170 in the flow space 141 and may be coupled to the columnar unit 300.

The second casing main body 140b according to the embodiment of the present disclosure may be coupled to the first casing main body 140a by a vertical hinge. Accordingly, as illustrated in FIG. 11, the second casing main body 140b may open and close the first casing main body 140a in a horizontal direction.

Here, when the second casing main body 140b opens the first casing main body 140a, the filter transportation unit 620 installed in the casing main body 140 may be exposed to the outside as illustrated in FIG. 11. Accordingly, after the second casing main body 140b is opened, the first roller unit 630 and the second roller unit 640 may be removed from the casing main body 140, so the first roller unit 630 and the second roller unit 640 used for a predetermined period of time may be washed.

In the embodiment of the present disclosure, the first transportation roller 631 of the first roller unit 630 and the first transportation roller 641 of the second roller unit 640 are installed in the first casing main body 140a. Furthermore, the second transportation roller 632 of the first roller unit 630 and the second transportation roller 642 of the second roller unit 640 are installed in the second casing main body 140b.

Accordingly, when the second casing main body 140b closes the first casing main body 140a, the oil mist filter 513 may be fitted between the first transportation roller 631 or 641 and the second transportation roller 632 or 642, so the replacement of the filter roll 610 may be further efficiently performed.

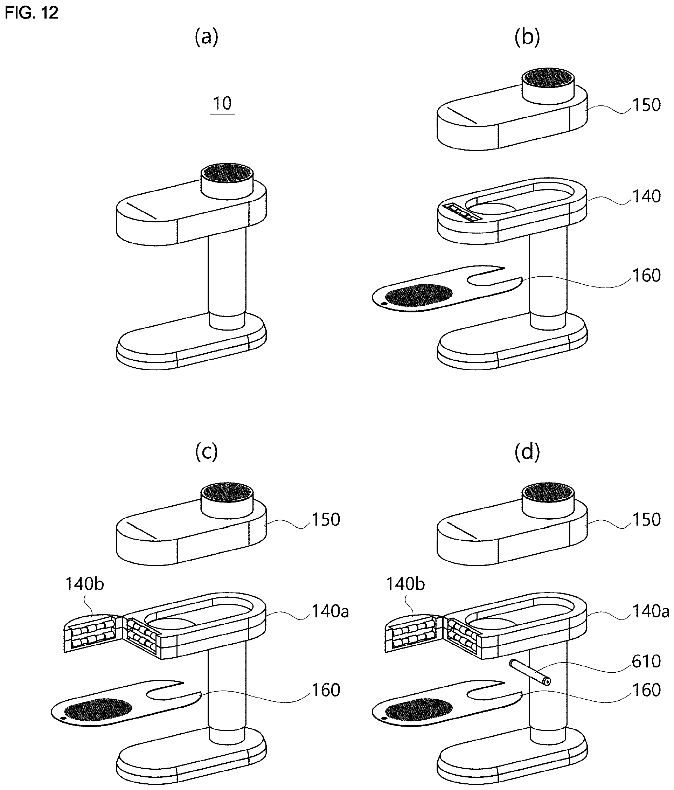

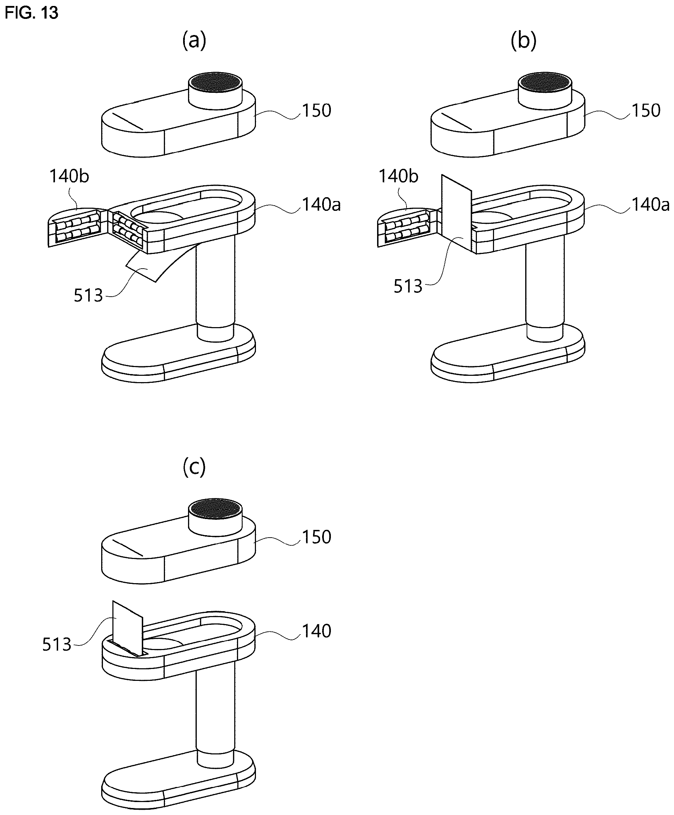

FIGS. 12A, 12B, 12C, 12D, 13A, 13B, and 13C are views illustrating a process in which the filter roll 610 is newly mounted in the portable hood 10 according to the embodiment of the present disclosure. FIGS. 12A, 12B, 12C, 12D, 13A, 13B, and 13C show only reference numerals necessary for description so that the configurations of the illustrated drawings can be more clearly identified.

Referring to FIGS. 12A, 12B, 12C, 12D, 13A, 13B, and 13C, as illustrated in FIG. 12A, in a state in which the portable hood 10 according to the embodiment of the present disclosure is assembled, first, the upper casing 150 and the lower casing 160 may be removed from the casing main body 140 as illustrated in FIG. 12B.

Next, as illustrated in FIG. 12C, the front of the first casing main body 140a is opened by rotating the second casing main body 140b relative to the first casing main body 140a. In this case, as described above, the first transportation roller 631 or 641 is installed in the first casing main body 140a, and the second transportation roller 632 or 642 is installed in the first casing main body 140a.

Next, as illustrated in FIG. 12D, the filter roll 610 may be mounted to the roll mounting portion 142 formed at the lower surface of the first casing main body 140a according to the method described above. Next, as illustrated in FIG. 13A, the oil mist filter 513 may be unwound by pulling the end of the oil mist filter 513 from the filter roll 610 mounted to the roll mounting portion 142 and may be bent at the front end of the first casing main body 140a, and as illustrated in FIG. 13B, the oil mist filter 513 may be directed upward. In this case, a flat surface of a side of the oil mist filter 513 may be in close contact with the front of the first transportation roller 631 or 641 installed in the first casing main body 140a.

Next, as illustrated in FIG. 13C, when the front of the first casing main body 140a is closed by rotating the second casing main body 140b, the oil mist filter 513 may be located between the first transportation roller 631 or 641 and the second transportation roller 632 or 642 and may be held therebetween, with the end of the oil mist filter 513 exposed to the upper side of the casing main body 140.

Next, when the upper casing 150 and the lower casing 160 are coupled to the casing main body 140, as illustrated in FIG. 1, the installation of the oil mist filter 513 may be completed by exposing the end of the oil mist filter 513 to the upper side of the head unit 100. Here, in a process of coupling the upper casing 150 to the casing main body 140, it is preferable that the coupling of the upper casing 150 to the casing main body 140 is performed after passing the end of the oil mist filter 513 through the filter discharging hole 151.

For another example, as for the process of coupling the lower casing 160 to the casing main body 140, in a state illustrated in FIG. 13B, the lower casing 160 may first be coupled to the first casing main body 140a and then the second casing main body 140b may be rotated.

Meanwhile, the purification filter 511, 512, 513, or 514 according to the embodiment of the present disclosure may further include the deodorization filter 512. Here, the pre-filter 514 installed in the through hole of the lower casing 160 may be included in a component of the purification filter 511, 512, 513, or 514.

In the embodiment of the present disclosure, an aluminum mesh filter may be used as the pre-filter 514, and a filter made of corrugated activated carbon may be used as the deodorization filter 512. Here, the example of each of the deodorization filter 512 and the pre-filter 514 described above is used in the embodiment of the preset disclosure, but filters made of other materials may be applied.

In the embodiment of the present disclosure, as illustrated in FIG. 4, after the upper casing 150 is removed from the casing main body 140, the deodorization filter 512 may be inserted from the upper side of the sucking unit 110 of the casing main body 140 and may be installed in the sucking unit 110. Accordingly, after the upper casing 150 is removed from the casing main body 140, the replacement of the deodorization filter 512 may be performed.

Referring back to FIG. 3, the sucking unit 110 according to the embodiment of the present disclosure may be open downward and may introduce air thereto from a position located under the sucking unit 110. Furthermore, the discharging unit 120 may be open upward and may discharge the air introduced through the sucking unit 110 in an upward direction.

Through this configuration, as illustrated in FIGS. 2A, 2B, and 2C, in a state in which the sucking unit 110 is located adjacently to the upper portion of the cooking utensil 31, the sucking unit 110 may introduce oil vapor thereto from the lower side of the sucking unit 110 so as to improve the efficiency of drawing air. Furthermore, the introduced the oil vapor may be discharged in an upward direction through the discharging unit 120 located at a position eccentric from the sucking unit 110 in a horizontal direction, and as described above, the bypassing of air caused by air discharged through the discharging unit 120 or cooking heat of the cooking utensil 31 may be prevented.

In addition, the discharging unit 120 may be configured to discharge oil vapor upward. Accordingly, as illustrated in FIGS. 2A, 2B, and 2C, the oil vapor may be discharged in a direction toward the fixing hood 50, whereby the portable hood may effectively remove oil vapor generated during cooking in cooperation with the fixing hood 50.

Here, in the embodiment of the present disclosure, the sucking unit 110 and the discharging unit 120 may be formed in the head unit 100 such that the sucking unit 110 and the discharging unit 120 are eccentrical so as not to overlap vertically. Accordingly, the flow of air introduced into the sucking unit 110 and the flow of air discharged from the discharging unit 120 may not affect each other, so the efficiency of drawing and discharging air may be improved.

Meanwhile, as illustrated in FIG. 3, the portable hood 10 according to the embodiment of the present disclosure may further include a discharging fan 410.

The discharging fan 410 according to the embodiment of the present disclosure may be installed in the discharging unit 120. Furthermore, the discharging fan 410 may generate drawing force such that air is introduced through the sucking unit 110 and discharged to the discharging unit 120.

In the embodiment of the present disclosure, the discharging fan 410 may be installed at the discharging unit 12, whereby the center of weight of the portable hood 10 according to the embodiment of the present disclosure may be formed at the side of the columnar unit 300 at which the discharging unit 120 is formed. Accordingly, as illustrated in FIGS. 2A, 2B, and 2C, even if the sucking unit 110 of the head unit 100 rotates in a horizontal direction, the center of weight of the portable hood 10 may be located at the side of the columnar unit 300, so even when the head unit 100 rotates horizontally, the portable hood 10 according to the embodiment of the present disclosure may be prevented from tipping over.

In addition, the portable hood 10 according to the embodiment of the present disclosure may further include a fan motor 420. In the embodiment of the present disclosure, the fan motor 420 may be installed under the discharging fan 410 and may rotate the discharging fan 410.

That is, the discharging fan 410 and the fan motor 420 may be installed in the head unit 100 such that the discharging fan 410 and the fan motor 420 is located at the side of the columnar unit 300, preferably, at the upper side of the columnar unit 300 as illustrated in FIG. 3, so as described above, the center of the entire weight of the portable hood may be formed at the columnar unit 300, whereby the tipping over of the portable hood 10 may be prevented.

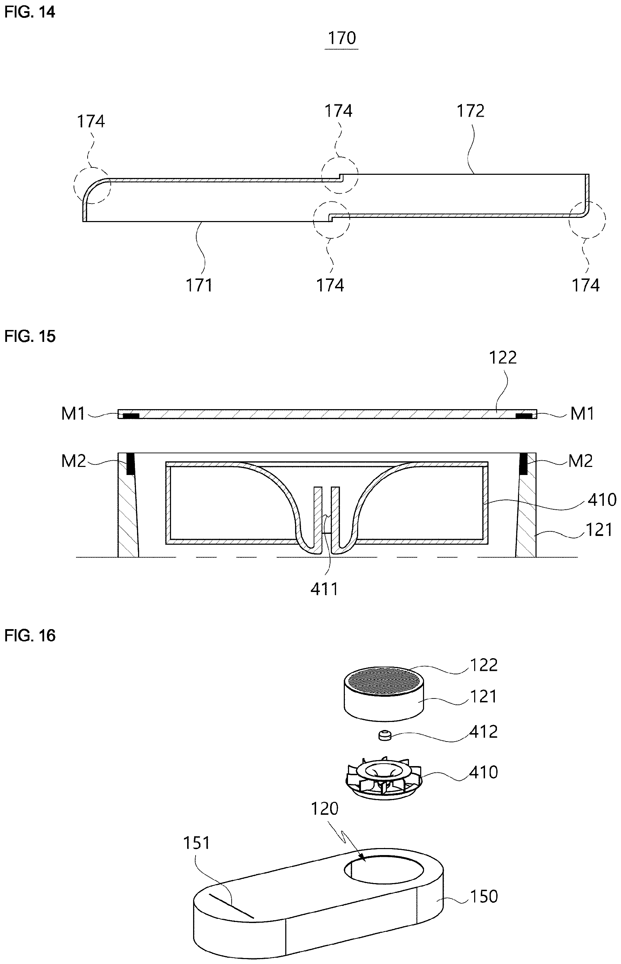

Meanwhile, as described above, the head unit 100 according to the embodiment of the present disclosure may include the head main body 130 and the flow-path portion 170 as illustrated in FIG. 14.

The sucking unit 110 and the discharging unit 120 described above may be formed at the head main body 130 according to the embodiment of the present disclosure such that the sucking unit 110 and the discharging unit 120 are eccentric in a horizontal direction.

The flow-path portion 170 according to the embodiment of the present disclosure may be provided in the head main body 130 and may have a flow path of air through which air introduced through the sucking unit 110 flows to the discharging unit 120.

FIG. 14 is a sectional view of the flow-path portion 170 taken along line B-B of FIG. 4 according to the embodiment of the present disclosure.

Referring to FIG. 14, for an example, the flow-path portion 170 according to the embodiment of the present disclosure may include a sucking inlet 171, a discharge hole 172, and an inner flow path 173.

Here, the sucking inlet 171 may be formed by being open downward toward the sucking unit 110 of the head main body 130. Furthermore, the discharge hole 172 may be formed by being open upward toward the discharging unit 120 of the head main body 130. Furthermore, the inner flow path 173 may communicate the sucking inlet with the discharge hole 172 in a horizontal direction.

In the embodiment of the present disclosure, as illustrated in FIGS. 4 and 14, the flow-path portion 170 as a container-shaped member having the sucking inlet 171, the discharge hole 172, and the inner flow path 173 may be installed inside the head main body 130. To this end, the flow space 141 in which the flow-path portion 170 sits may be formed in the head main body 130 as illustrated in FIG. 4.

In the embodiment illustrated in FIGS. 4 and 14, the flow-path portion 170 is provided as a separate member and is installed in the flow space 141 of the inside of the head main body 130, but the head main body 130 may have the sucking inlet, the discharge hole 172, and the flow-path portion 170 having the inner flow path 173 formed inside the head main body 130 through the processing of the inside of the head main body 130.

Here, as illustrated in FIG. 14, in the inner wall surface of the inner flow path 173, an edge portion 174 in which the flow direction of air is changed may be configured to have a round shape, so it is possible to minimize the flow loss of air generated when the air flowing through the flow-path portion 170 collides with the wall surface.

In the embodiment of the present disclosure, a cross-sectional area of the discharging unit 120 may be formed wider than a cross-sectional area of the flow-path portion 170, in particular, a cross-sectional area of the inner flow path 173. In general, flow loss may be caused by the expansion or contraction of a flow path. When a flow path expands or contracts, flow loss may be minimized in a case in which the cross-sectional area of the discharging unit 120 is wider than the cross-sectional area of the flow-path portion 170.

Meanwhile, in the embodiment of the present disclosure, the discharging fan 410 and the fan motor 420 may be installed in the head main body 130 such that the discharging fan 410 and the fan motor 420 are located at the upper side and lower side, respectively, of the discharge hole 172 of the flow-path portion 170. More specifically, as illustrated in FIG. 3, the discharging fan 410 may be installed in the head main body 130 such that the discharging fan 410 is located at the upper side of the discharge hole 172 of the flow-path portion 170. Furthermore, the fan motor 420 may be installed in the head main body 130 such that the fan motor 420 is located at the lower side of the discharge hole 172 of the flow-path portion 170.

Through this configuration, in a process in which oil vapor introduced through the sucking unit 110 is discharged to the discharging unit 120 through the flow-path portion 170, the oil vapor may be discharged to the outside without passing through the fan motor 420 installed under the flow-path portion 170, so the contamination of the fan motor 420 due to the oil vapor may be prevented. Accordingly, in the process of disassembling the portable hood 10 to wash the portable hood 10 according to the embodiment of the present disclosure, the fan motor 420 may not be required to be disassembled, so the process of the dissembling and washing of the portable hood may be simplified.

Meanwhile, as illustrated in FIG. 3, the head main body 130 according to the embodiment of the present disclosure may include the casing main body 140, the upper casing 150, and the lower casing 160.

In the casing main body 140 according to the embodiment of the present disclosure, the sucking inlet 171 may be formed in the sucking unit 110. Furthermore, as described above, a separate flow-path portion 170 may be installed in the casing main body 140. As illustrated in FIG. 3, the flow space 141 in which the flow-path portion 170 sits may be formed in the casing main body 140.

The discharging unit 120 may be formed at the upper casing 150 according to the embodiment of the present disclosure. In the embodiment of the present disclosure, the flow space 141 formed in the casing main body 140 may have a shape open upward, and the upper casing 150 may be coupled to the casing main body 140 from the upper side of the casing main body 140 to shield the flow space 141.

Accordingly, after removing the upper casing 150 from the casing main body 140, a user may remove the flow-path portion 170 sitting in the flow space 141, so the washing of the flow-path portion 170 may be performed.

In the embodiment of the present disclosure, the upper casing 150 may be coupled to the casing main body 140 such that the upper casing 150 covers the side surface of the casing main body 140. That is, the upper casing 150 may constitute the side outer surface of the head main body 130.

The lower casing 160 according to the embodiment of the present disclosure may be coupled to the casing main body 140 from the lower side of the casing main body 140. The lower casing 160 according to the embodiment of the present disclosure may have a plate shape.

Here, a through hole (not shown) may be formed vertically through the lower casing 160 such that the through hole is located at a position corresponding to the sucking unit 110. Furthermore, the pre-filter 514 may be installed in the through hole formed in the lower casing 160. In the embodiment of the present disclosure, the pre-filter 514 may filter dust or foreign matter having a relatively large size introduced into the sucking unit 110.

Meanwhile, as illustrated in FIGS. 3 and 4, the discharging unit 120 according to the embodiment of the present disclosure may further include a fan housing 121.

The fan housing 121 according to the embodiment of the present disclosure may protrude upward from the upper flat surface of the head main body 130. In the embodiment of the present disclosure, the upper casing 150 may constitute the upper flat surface of the head main body 130, and the fan housing 121 may be formed by protruding upward from the upper flat surface of the upper casing 150.

Here, in the embodiment of the present disclosure, the fan housing 121 may have a cylindrical shape open in a vertical direction, and the discharging fan 410 may be received in the fan housing 121. More specifically, in a state in which the fan housing 121 is configured to protrude upward from the upper casing 150 of the head main body 130, the fan housing 121 may be configured to receive the discharging fan 410 therein, whereby as illustrated in FIG. 3, even if the discharging fan 410 and the fan motor 420 are arranged vertically in the head main body 130, the entire thickness of the head main body 130 may be slimmed.

A discharge grill 122 may be removably coupled to an upper opening of the fan housing 121 according to the embodiment of the present disclosure and may cover the upper opening of the fan housing 121. Accordingly, the discharge grill 122 prevents accidents which may occur during the rotation of the discharging fan 410 and enables oil vapor to be discharged to the upper side of the discharging fan 410.

In the embodiment of the present disclosure, the discharging fan 410 may be detachably coupled to the fan housing 121 by magnetic force. Referring to FIG. 15, at least one first magnetic member M1 may be installed at an edge of the discharge grill 122, and a second magnetic member M2 corresponding to the first magnetic member M1 may be installed at the upper edge of the fan housing 121, whereby the discharge grill 122 may be removably coupled to the upper portion of the fan housing 121. Here, both the first magnetic member M1 and the second magnetic member M2 may have magnetic force, but only one magnetic member may have magnetic force.

For another example, the discharge grill 122 may be coupled to the fan housing 121 in a forcible fitting manner, or the discharge grill 122 may be hooked to the fan housing 121 by rotating the discharge grill 122. Accordingly, the discharge grill 122 may be detachably coupled to the fan housing 121 in various manners.

In the embodiment illustrated in FIG. 4, the fan housing 121 is formed to be integrated with the upper casing 150 of the head main body 130, so the fan housing 121 is configured such that the fan housing 121 cannot be removed from the upper casing 150 of the head main body 130. For another example, as illustrated in FIG. 16, the fan housing 121 may be detachably coupled to the upper casing 150 of the head main body 130.

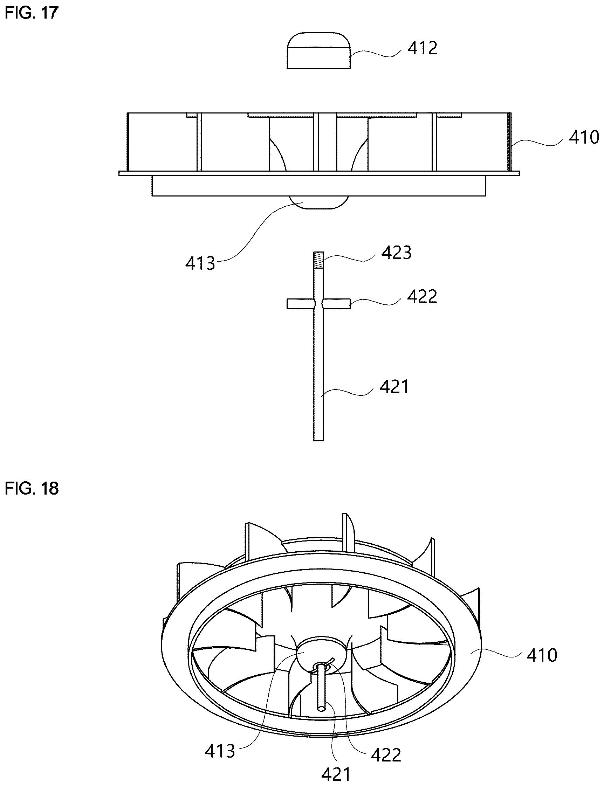

FIGS. 17 and 18 are views illustrating a coupling structure between the discharging fan 410 and the fan motor 420 according to the embodiment of the present disclosure.

Referring to FIGS. 3, 17, and 18, the fan motor 420 according to the embodiment of the present disclosure may include a fan shaft 421. The fan shaft 421 may extend from the fan motor 420 toward the discharging fan 410 and may transmit the rotational force of the fan motor 420 to the discharging fan 410. Here, as illustrated in FIG. 17, threads 423 may be formed at the outer circumferential surface of an end part of the fan shaft 421 of the discharging fan 410.

The discharging fan 410 according to the embodiment of the present disclosure may include a shaft through hole 411 (see FIG. 15) formed vertically therethrough. Here, when connecting the discharging fan 410 with the fan motor 420, the end part of the fan shaft 421 may pass through the shaft through hole 411 such that the discharging fan 410 and the fan shaft 421 are coupled to each other. In this case, the end part of the fan shaft 421, that is, the end part on which the threads 423 are formed may be exposed to the upper side of the discharging fan 410.

The discharging fan 410 according to the embodiment of the present disclosure may further include a fan nut 412. The fan nut 412 may be engaged with the threads formed at the end part of the fan shaft 421 passing through the shaft through hole 411 such that the discharging fan 410 is held to the fan shaft 421.

According to the above configuration, after the discharge grill 122 is removed from the fan housing 121, the fan nut 412 may be unscrewed from the fan shaft 421, so the discharging fan 410 may be removed from the fan shaft 421.

Here, in the embodiment of the present disclosure, a fan holding part 413 may be formed at the lower part of the discharging fan 410. Furthermore, the fan shaft 421 may further include a shaft holding part 422 held in the fan holding part 413.

The shaft holding part 422 according to the embodiment of the present disclosure may protrude radially outward from the outer surface of the fan shaft 421 and may be held in the fan holding part 413 when the fan shaft 421 passes through the shaft through hole 411. In the embodiment of the present disclosure, as illustrated in FIGS. 17 and 18, the shaft holding part 422 may be provided in the shape of a bar protruding radially outward from the fan shaft 421, and the fan holding part 413 may have a slot formed therein such that the bar-shaped shaft holding part 422 is inserted to the slot.

Accordingly, when the fan shaft 421 is rotated by the rotation of the fan motor 420, the shaft holding part 422 held in the fan holding part 413 may rotate the discharging fan 410.

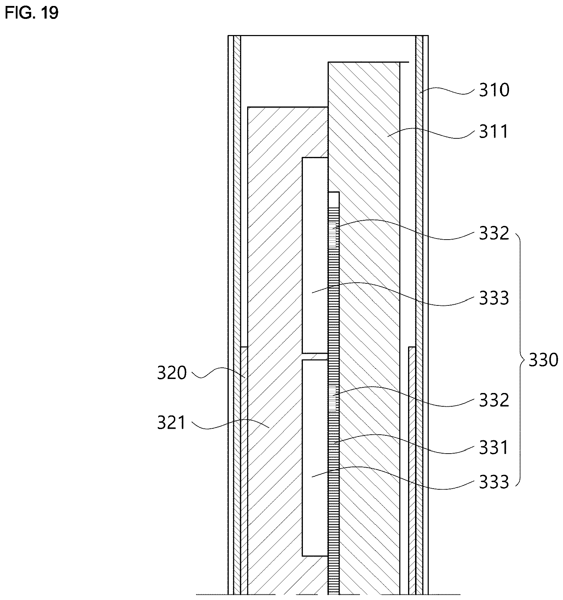

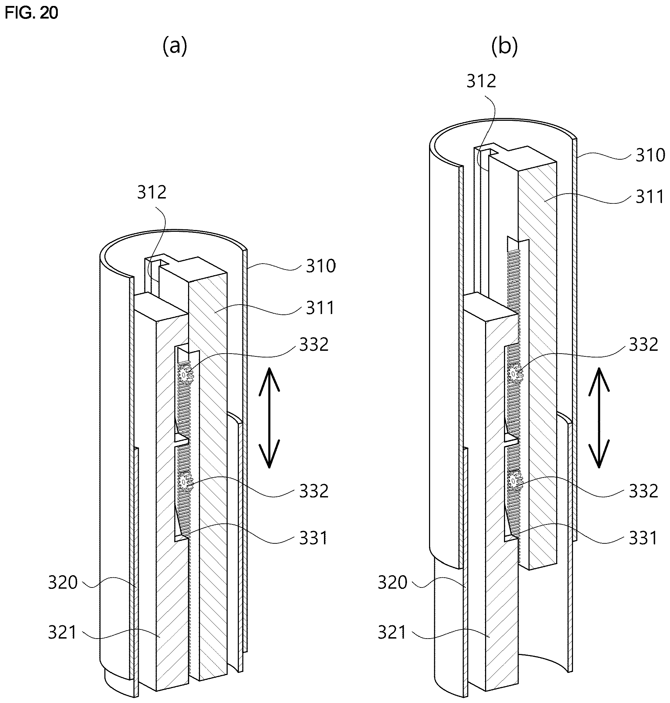

Meanwhile, the columnar unit 300 according to the embodiment of the present disclosure may be provided such that a distance between the head unit 100 and the base unit 200, that is, the height of the head unit 100 is adjusted. FIGS. 19, 20A, and 20B are views illustrating the height adjustment structure of the columnar unit 300 according to the embodiment of the present disclosure.

Referring to FIGS. 1, 19, 20A, and 20B, the columnar unit 300 according to the embodiment of the present disclosure may include a first columnar member 310, a second columnar member 320, and a height adjustment unit 330.

The first columnar member 310 according to the embodiment of the present disclosure may be coupled to the head unit 100 at a first side thereof. Here, the first columnar member 310 is illustrated to have a cylindrical shape but may be provided in the shape of a polygonal pillar such as a container having a square cross section.

The second columnar member 320 according to the embodiment of the present disclosure may be coupled to the base unit 200 at a first side thereof. Here, the shape of the second columnar member 320 may correspond to the shape of the first columnar member 310 and may have a cylindrical shape in the embodiment of the present disclosure. The second columnar member 320 may have a shape different from the cylindrical shape by corresponding to the first columnar member 310.

A second side of the second columnar member 320, that is, an upper area of the second columnar member 320 may be inserted through the lower portion of the first columnar member 310 which is a second side of the first columnar member 310. Accordingly, the height of the head unit 100 may be adjusted according to the height of the second columnar member 320 inserted into the lower portion of the first columnar member 310.

The height adjustment unit 330 according to the embodiment of the present disclosure may vertically move the first columnar member 310 relative to the second columnar member 320 such that the height of the head unit 100 is adjusted.

In the embodiment of the present disclosure, as illustrated in FIGS. 19, 20A, and 20B, the height adjustment unit 330 may include a rack member 331, a pinion member 332, and a damper 333.

The rack member 331 according to the embodiment of the present disclosure may be installed at a first side of one of the first columnar member 310 and the second columnar member 320. In the embodiment, as illustrated in FIGS. 13A, 13B, 13C, 20A, and 20B, the rack member 331 is installed in the first columnar member 310.

In the embodiment of the present disclosure, the rack member 331 is formed along the vertical direction of a first guide member 311 coupled to the inner surface of the first columnar member 310.

The pinion member 332 according to the embodiment of the present disclosure may rotate in engagement with the rack member 331. Here, the pinion member 332 may be coupled to the second columnar member 320 (or the first columnar member 310, the same hereinafter) through the damper 333, so the pinion member 332 may vertically move together with the second columnar member 320.

The damper 333 according to the embodiment of the present disclosure may be installed at a second side of one of the first columnar member 310 and the second columnar member 320. That is, in a case in which the rack member 331 is installed at the first columnar member 310, the damper 333 may be installed at the second columnar member 320, and in a case in which the rack member 331 is installed at the second columnar member 320, the damper 333 may be installed at the first columnar member 310. In the embodiment of the present disclosure, the damper 333 is installed at the second columnar member 320. Furthermore, in the embodiment of the present disclosure, the damper 333 may be installed at a second guide member 321 coupled to the inner surface of the second columnar member 320.

The damper 333 according to the embodiment of the present disclosure may be connected to the rotating shaft of the pinion member 332 and may vertically move the first columnar member 310 when the pinion member 332 rotates in engagement with the rack member 331. In this case, the damper 333 provides a load to the first columnar member 310 such that the vertical position of the first columnar member 310 is maintained, so the height of the head unit 100 may be adjusted to a predetermined height.

Accordingly, when adjusting the height of the head unit 100, a user may vertically move the head unit 100. The head unit 100 may vertically move while the rack member 331 operates in engagement with the pinion member 332. Furthermore, when a user stops the vertical movement of the head unit 100 at a desired height, the vertical movement of the head unit 100 may stop at the desired height according to the load of the damper 333, so the height of the head unit 100 may be adjusted to the desired height.

In the embodiment, as illustrated in FIGS. 20A and 20B, a guide groove 312 may be formed at the first guide member 311 along a vertical direction thereof. Furthermore, a guide rib (not shown) may be formed at the second guide member 321 such that the vertical movement of the head unit is guided with the guide rib inserted to the guide groove 312. Accordingly, the vertical relative movement of the first guide member 311 to the second guide member 321 may be stably guided, so the vertical movement of the first columnar member 310 may be stably performed.

Meanwhile, as described above, in the portable hood 10 according to the embodiment of the present disclosure, the head unit 100 rotates horizontally relative to the columnar unit 300. The portable hood 10 according to the embodiment of the present disclosure may further include a rotation unit 700 coupling the columnar unit 300 to the base unit 200 to each other such that the columnar unit 300 rotates relative to the base unit 200.

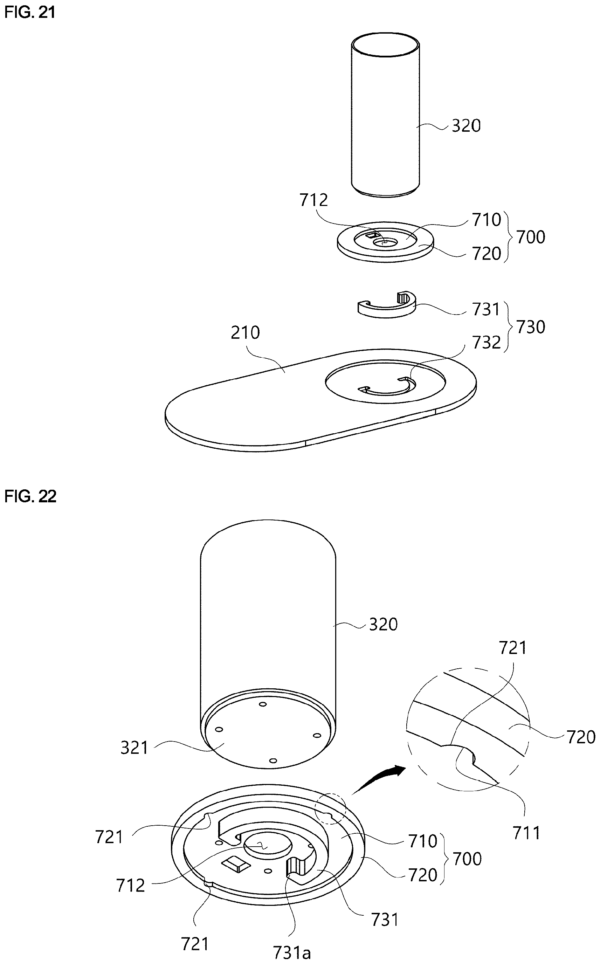

FIGS. 21 and 22 are views illustrating the configuration of the rotation unit 700 according to the embodiment of the present disclosure.

Referring to FIGS. 21 and 22, the rotation unit 700 according to the embodiment of the present disclosure may include a first rotating member 710 and a second rotating member 720.

The first rotating member 710 may be installed at the lower portion of the columnar unit 300. Here, in the embodiment of the present disclosure, the columnar unit 300 is composed of the first columnar member 310 and the second columnar member 320, and the first rotating member 710 is installed at the lower portion of the second columnar member 320.

The second rotating member 720 may be installed at the base unit 200. Here, the second rotating member 720 may support the first rotating member 710 such that the first rotating member 710 is rotatable so as to rotate the columnar unit 300.

In the embodiment of the present disclosure, the first rotating member 710 has a shape of a circular plate. Furthermore, the second rotating member 720 may have a shape of a circular ring to support the first rotating member 710 such that the second rotating member 720 is rotatable along the inner circumference of the first rotating member 710. Accordingly, the first rotating member 710 may stably rotate in the second rotating member 720 having the shape of a circular ring.

In the embodiment, a holding protrusion 711 may be formed on the outer circumference of the first rotating member 710 by protruding outward in a radial direction therefrom. Furthermore, a plurality of holding recesses 721 may be formed at predetermined angle intervals at the inner circumference of the second rotating member 720. Here, when the first rotating member 710 rotates, the holding protrusion 711 may be inserted and held in the holding recess 721 formed at a predetermined angle, a user may recognize a predetermined angular rotation and the holding of the holding protrusion 711 may be maintained at the associated angle in a state in which an external force is not applied.

In the present disclosure, for example, three holding recesses 721 are formed at 90° intervals. Here, the three holding recesses 721 may be formed at positions at which the base unit 200 and the head unit 100 are located side by side in a vertical direction, as illustrated in FIG. 2A, and at positions of the head unit 100 rotating 90° to the left and to the right relative to the base unit 200, as illustrated in FIGS. 2B and 2C. Accordingly, the holding recess 721 may be formed at an angle with a relatively high frequency of use among the rotation angles of the head unit 100 such that the use convenience of the portable hood 10 of the present disclosure is increased.

Meanwhile, the rotation unit 700 according to the embodiment of the present disclosure may further include a rotation control part 730. For example, the rotation control part 730 may control the rotation of the first rotating member 710 such that the head unit 100 rotates only to a preset angle from a position parallel to the base unit 200. For example, in the embodiment of the present disclosure, as illustrated in FIGS. 2A, 2B, and 2C, the rotation control part 730 may control the rotation of the first rotating member 710 such that the first rotating member 710 can rotate by 90° side to side to the maximum of 180°.

In the embodiment of the present disclosure, the rotation control part 730 may include a control member 731 coupled to the first rotating member 710, and a control groove 732 formed at the base unit 200. Here, the control groove 732 may be formed at the flat surface of the base unit 200 such that the control groove 732 has a semicircular shape of 180°. A control protrusion 731a formed at the control member 731 may be held in the control groove 732 such that the control member 731 rotates only within the range of 180° while the control member 731 rotates with the control protrusion 731a inserted in the control groove 732.

According to the above configuration, the head unit 100 may be configured to rotate at 90° side to side, that is, only within the range of 180°, whereby the twisting of a cable connected from the base unit 200 to the head unit 100, for example, a power cable or signal cable for the rotation and control of the fan motor 420 may be minimized.

In addition, as illustrated in FIGS. 2A, 2B, and 2C, the portable hood 10 according to the embodiment of the present disclosure may be used at various angles within a 180° rotation range and may cover any position at which the portable hood 10 is required to be used.

In the embodiment described above, the discharging fan 410 and the fan motor 420 of the portable hood 10 according to the embodiment of the present disclosure are described to be arranged vertically at the upper side of the columnar unit 300.

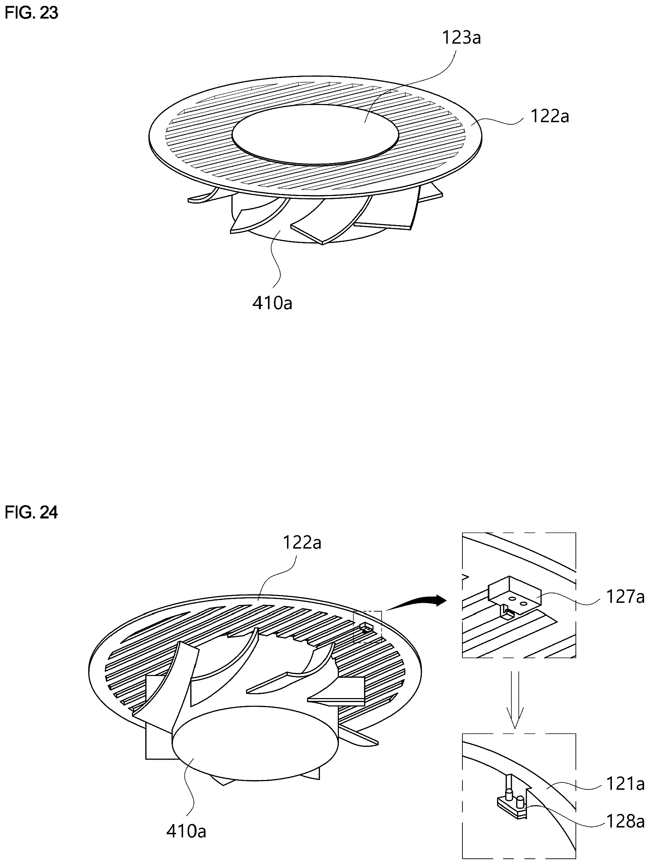

For another example, the discharging fan 410 and the fan motor 420 according to the embodiment of the present disclosure may be provided to be integrated with each other and may be installed at the upper side of the columnar unit 300. FIGS. 23 to 25 are views illustrating the configuration of the discharging fan 410 and the fan motor 420 integrated with each other according to the embodiment of the present disclosure.

Referring to FIGS. 23 to 25, the discharging fan 410 may be installed in the discharging unit 120, for example, inside the fan housing 121. Furthermore, the fan motor 420 may be installed in the discharging fan 410 and may rotate the discharging fan 410.

In addition, the discharging unit 120 according to the embodiment of the present disclosure may further include a shaft connection member 123a. The shaft connection member 123a may connect the rotating shaft of the discharging fan 410 to the discharge grill 122 such that the discharging fan 410 rotates inside the fan housing 121.

Accordingly, when removing the discharge grill 122 from the fan housing 121, the discharging fan 410 and the fan motor 420 together may be removed from the fan housing 121 by the shaft connection member 123a.

According to the above configuration, the discharging fan 410 and the fan motor 420 may be integrally received in the fan housing 121, and as described above, the center of weight of the portable hood 10 according to the embodiment of the present disclosure may be formed at the columnar unit 300, so the tipping over of the portable hood 10 may be prevented.

Here, in order to connect a power cable to the fan motor 420 installed inside the discharging fan 410, the portable hood 10 according to the embodiment of the present disclosure may further include a first connector 127a and a second connector 128a.

The first connector 127a may be installed at the discharge grill 122 and may be electrically connected to the fan motor 420. Furthermore, the second connector 128a may be installed at the fan housing 121 such that the second connector 128a is located at a position corresponding to the position of the first connector 127a. Here, when the discharge grill 122 is mounted to the fan housing 121, the second connector 128a may be connected to the first connector 127a and may supply power to the fan motor 420. Here, the second connector 128a may be electrically connected to a printed circuit board installed at the base unit 200 through the columnar unit 300, so when the first connector 127a and the second connector 128a are connected to each other, power may be supplied to the fan motor 420.

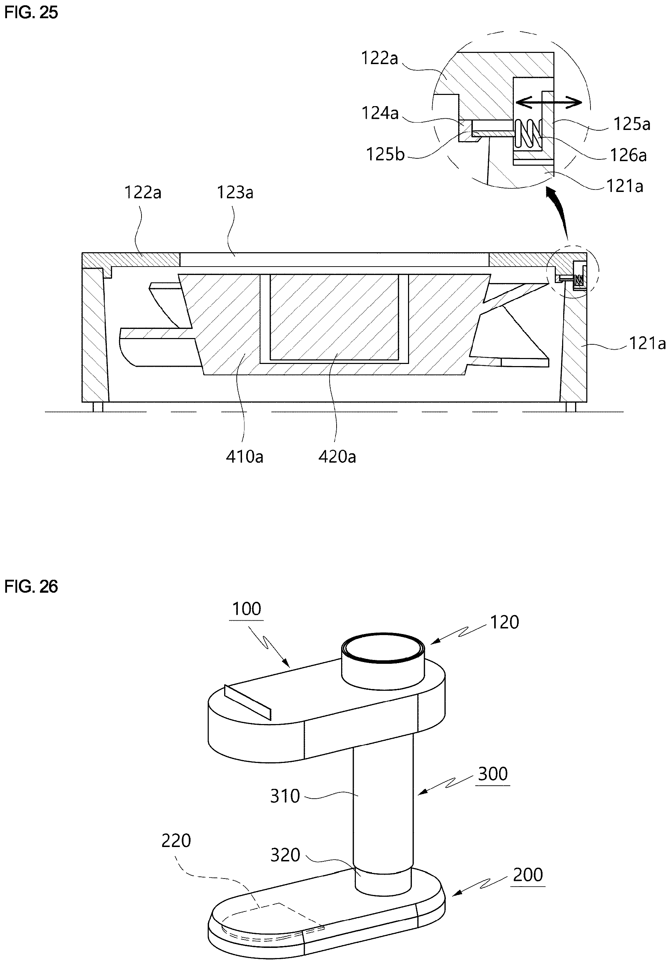

Meanwhile, as illustrated in FIG. 25, the discharging unit 120 according to the embodiment of the present disclosure may include a holding jaw 124a, a holding lever 125a and 125b, and an elastic member 126a.

The holding jaw 124a according to the embodiment of the present disclosure may be installed at the discharge grill 122. The holding jaw 124a may be inserted into the fan housing 121 when the discharge grill 122 is mounted to the fan housing 121.

The holding lever 125a and 125b according to the embodiment of the present disclosure may be installed at the fan housing 121 such that the holding lever 125a and 125b can be held in and released from the holding jaw 124a. Accordingly, in a state in which the holding lever 125a and 125b is held in the holding jaw 124a, the discharge grill 122 may be coupled to and held in the fan housing 121, and when the holding lever 125a and 125b is released from the holding jaw 124a, the discharge grill 122 may be removed from the fan housing 121.

The elastic member 126a according to the embodiment of the present disclosure may elastically press the holding lever 125a and 125b in a direction in which the holding lever 125a and 125b are held in the holding jaw 124a. In the embodiment of the present disclosure, the holding lever 125a and 125b may be located at the outer side of the fan housing 121 and may be composed of a lever part 125a which a user can pull by the user's hand and a holding part 125b extending to the inner side of the fan housing 121 from the lever part 125a and being held in and released from the holding jaw 124a. Furthermore, the elastic member 126a may be provided as a tension spring and may pull the lever part 125a in a direction in which the holding part 125b is held in the holding jaw 124a such that the holding part 125b is maintained to be held in the holding jaw 124a.

According to the above configuration, when a user pulls the lever part 125a, an elastic force of the tension spring may be overcome, and the holding part 125b may be removed from the holding jaw 124a, so the discharge grill 122 may be removed from the fan housing.

Meanwhile, as illustrated in FIG. 26, the base unit 200 according to another embodiment of the present disclosure may include a weight plate 220. Here, the weight plate 220 according to the embodiment of the present disclosure may be made of metal and may be provided in the base unit 200 such that the columnar unit 300 and the head unit 100 are prevented from tipping over.

As described above, the head unit 100 and the base unit 200 according to the embodiment of the present disclosure may be coupled eccentrically to the columnar unit 300 in horizontal directions, wherein the head unit 100 may be installed to be horizontally rotatable. The weight plate 220 made of relatively heavy metal may be provided in the base unit 200 and thus the center of weight of the portable hood may be located at a lower side of the portable hood, so the portable hood 10 according to the embodiment of the present disclosure may be prevented from tipping over.

The portable hood 10 according to the embodiment of the present disclosure may further include a battery module 800. The portable hood 10 according to the embodiment of the present disclosure may be provided with a power cable (not shown) to receive power and may have the battery module 800 installed therein to increase portability such that the battery module 800 supplies actuating power required for operating the fan motor 420.

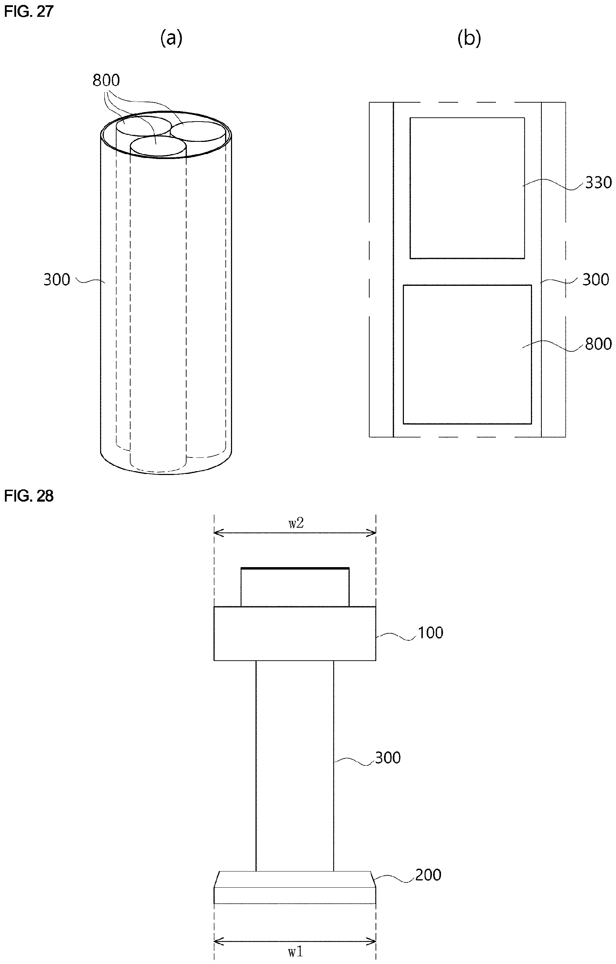

In still another embodiment of the present disclosure, as illustrated in FIGS. 27A and 27B, the battery module 800 is provided inside the columnar unit 300. Accordingly, the important components are arranged in the columnar unit 300, and the center of weight of the portable hood may be formed at the columnar unit 300, so the tipping over of the portable hood 10 may be prevented.

Here, the battery module 800 is arranged at a lower portion of the inside of the columnar unit 300. When the height adjustment unit 330 described above is installed in the columnar unit 300, as illustrated in FIG. 27B, the height adjustment unit 330 may be located at the upper side of the columnar unit 300, and the battery module 800 may be located at the lower portion of the columnar unit 300.

Accordingly, the height adjustment of the columnar unit 300 may be performed, and due to the provision of the battery module 800 inside the columnar unit 300, the portable hood 10 according to the embodiment of the present disclosure may be more effectively prevented from tipping over.

In addition, in a case in which the battery module 800 is installed to include a plurality of battery modules, as illustrated in FIG. 27A, the plurality of battery modules 800 may be horizontally arranged in parallel to each other in the columnar unit 300. Accordingly, the portable hood 10 according to the embodiment of the present disclosure may maintain a more stable standing state, so that the portable hood 10 may be prevented from tipping over.

Furthermore, in the portable hood 10 according to the embodiment of the present disclosure, as illustrated in FIG. 28, the width w1 of the base unit 200 in a direction crossing a direction toward the sucking unit 110 from the discharging unit 120 eccentric from each other may be equal to or wider than the width w2 of the head unit 100.

Accordingly, a more stable standing of the portable hood 10 is ensured, so that the portable hood 10 may be effectively prevented from tipping over.

In the above-described embodiments, the head unit 100 according to the embodiment of the present disclosure may be configured to rotate in a horizontal direction and may be configured to adjust height.

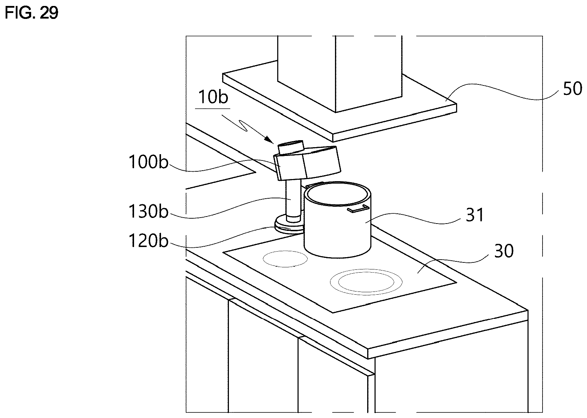

For another example, as illustrated in FIG. 29, the head unit 100 according to still another embodiment of the present disclosure may be coupled to the columnar unit 300 such that the head unit 100 can adjust an angle in a vertical direction. Accordingly, the head unit 100 may perform the adjustment of air-introduction angle in addition to the height adjustment and may effectively respond even to a cooking utensil located at a height beyond the range of the height adjustment of the head unit 100.

In the embodiment described abo0ve, the filter unit 500 installed at the sucking unit 110 includes the deodorization filter 512, the oil mist filter 513, and the pre-filter 514, which are made of a non-woven fabric, corrugated activated carbon, and aluminum mesh, respectively. This is because the portable hood 10 according to the above-described embodiment is suitable for removing oil vapor generated during cooking.

For another example, the portable hood 10 according to the embodiment of the present disclosure may be configured to function as an air purifier. As described above, the deodorization filter 512 may be replaced through the sucking inlet 171 of the casing main body 140, and the oil mist filter 513 may be replaced through the replacement of the filter roll 610. Likewise, the pre-filter 514 may be detachably installed at the lower casing 160.

Here, for the operation of the portable hood as an air purifier, a user may replace the deodorization filter 512, the oil mist filter 513, or the pre-filter 514 according to the embodiment described above with a filter suitable for air purification to be used, so the scope of use of the portable hood 10 according to the embodiment of the present disclosure may expand.

For example, the pre-filter 514 may be replaced with a plastic mesh filter suitable for the air purifier. Furthermore, a HEPA filter and a deodorization filter may be installed sequentially at a position at which the deodorization filter 512 described above is installed. In this case, a user may use the portable hood as the air purifier with the oil mist filter 513 unremoved or removed.

## Claims

1. A portable hood (10) **characterized in that** the portable hood (10) comprises:
a base unit (200) sitting on a foundation;
a head unit (100) having a sucking unit (110) allowing air to be introduced thereto and a discharging unit (120) discharging the air introduced into the sucking unit (110);
a columnar unit (300) connecting the head unit (100) with the base unit (200) such that the head unit (100) is spaced apart upward from the base unit (200); **characterized in that** a roll filter unit (600) is installed in the head unit (100) and having a purification filter capable of being discharged past the sucking unit (110) to the outside of the head unit (100),
wherein the roll filter unit (600) comprises:
a filter roll (610) installed rotatably in the head unit (100) with the purification filter wound on the filter roll (610), and
a filter transportation unit (620) installed in the head unit (100) such that the filter transportation unit (620) is located at a side opposite to the filter roll (610) with the sucking unit (110) placed between the filter transportation unit (620) and the filter roll (610), the filter transportation unit (620) configured to discharge the purification filter extending past the sucking unit (110) from the filter roll (610) to an upper side of the head unit (100).

2. The portable hood (10) of claim 1, **characterized in that** the head unit (100) comprises a roll mounting portion (142) to which the filter roll (610) is removably mounted.

3. The portable hood (10) of claim 2, **characterized in that** the roll mounting portion (142) comprises:
a roll accommodation portion (142a) being open downward at a lower surface of the head unit (100), the filter roll (610) being inserted into the roll accommodation portion (142a), and
a shaft combination portion (142b) formed at each of opposite inner wall surfaces of the roll accommodation portion (142a),
wherein the filter roll (610) comprises:
a filter drum (611) on which the purification filter is wound, and
a pair of roll combination kits (612) installed at opposite sides of the filter drum (611), respectively, and supporting the filter drum (611) such that the filter drum (611) is rotatable, the roll combination kits (612) being removably coupled to the shaft combination portions (142b), respectively, when the filter roll (610) is installed at the roll mounting portion (142).

4. The portable hood (10) of claim 3, **characterized in that** each of the roll combination kits (612) comprises:
a kit main body (613);
a first shaft protrusion (614) protruding from a first side surface of the kit main body (613) and coupled rotatably to a side surface of the filter drum (611); and
a second shaft protrusion (615) protruding from a second side surface of the kit main body (613) and inserted into the shaft combination portion (142b).

5. The portable hood (10) of claim 4, **characterized in that** when the second shaft protrusion (615) is coupled to the shaft combination portion (142b), the second shaft protrusion (615) is pressed in a direction in which the second shaft protrusion (615) is inserted into the shaft combination portion (142b),
wherein optionally the kit main body (613) comprises:
a first kit member (613a);
a second kit member (613b) having the second shaft protrusion (615) formed therein and coupled movably to the first kit member (613a); and
a pressing member (613c) installed between the first kit member (613a) and the second kit member (613b) and configured to press the second kit member (613b) in a direction in which the second shaft protrusion (615) is inserted into the shaft combination portion (142b),
wherein the second kit member (613b) of the kit main body (613) is pushed toward the first kit member (613a) such that the second shaft protrusion (615) is coupled to and decoupled from the shaft combination portion (142b).

6. The portable hood (10) of any one of claims 2 to 5, **characterized in that** the filter transportation unit (620) comprises: a first roller unit (630) and a second roller unit (640) installed inside the head unit (100) by being spaced vertically apart from each other and configured to discharge the purification filter upward.

7. The portable hood (10) of claim 6, **characterized in that** the first roller unit (630) and the second roller unit (640) comprise a first transportation roller (631, 641) and a second transportation roller (632, 642) configured to rotate by facing each other in a horizontal direction with the purification filter placed between the first transportation roller (631, 641) and the second transportation roller (632, 642) so as to move the purification filter upward.

8. The portable hood (10) of claim 7, **characterized in that** the filter transportation unit (620) further comprises a cutting unit (650) located between the first roller unit (630) and the second roller unit (640), the cutting unit (650) being configured to transversely cut the purification filter.

9. The portable hood (10) of claim 8, **characterized in that** the cutting unit (650) comprises:
a cutter (651) configured to cut the purification filter, and
a cutter moving unit (652) configured to transversely reciprocate the cutter (651) such that the purification filter is transversely cut,
wherein optionally the cutter moving unit (652) comprises:
a belt (653) at which the cutter (651) is installed, and
a pair of pulleys (654) configured to perform forward and reverse rotations such that the cutter (651) installed at the belt (653) reciprocates.

10. The portable hood (10) of any one of claims 8 to 9, **characterized in that** the head unit (100) comprises:
a head main body (130) having the sucking unit (110), the discharging unit (120), and the roll mounting portion (142) formed therein, the sucking unit (110) and the discharging unit (120) being formed eccentrically in a horizontal direction, and
a flow-path portion (170) provided in the head main body (130), air introduced through the sucking unit (110) flowing to the discharging unit (120) through the flow-path portion (170),
wherein with the sucking unit (110) placed between the filter roll (610) and the filter transportation unit (620), the filter roll (610) and the filter transportation unit (620) are installed at opposite sides, respectively, of the eccentric direction of the sucking unit (110) and the discharging unit (120) such that the filter roll (610) is installed at a side of the discharging unit (120).

11. The portable hood (10) of claim 10, **characterized in that** the filter roll (610) is mounted to the roll mounting portion (142) such that the purification filter wound on the filter roll (610) is unwound in a direction covering a lower part of the head main body (130) and extends toward a lower part of the sucking unit (110), wherein the purification filter bends upward after moving past the sucking unit (110) and moves toward the filter transportation unit (620).

12. The portable hood (10) of claim 11, **characterized in that** the head main body (130) comprises:
a casing main body (140) provided with the sucking unit (110) and the roll mounting portion (142) and having the filter transportation unit (620) installed therein;
an upper casing (150) having the discharging unit (120) and coupled to the casing main body (140) from an upper side of the casing main body (140); and
a lower casing (160) having a through hole formed vertically therethrough such that the through hole is located at a position corresponding to the sucking unit (110), the lower casing (160) being coupled to the casing main body (140) from a lower side of the casing main body (140) so as to shield the roll mounting portion (142).

13. The portable hood (10) of claim 12, **characterized in that** the casing main body (140) comprises:
a first casing main body (140a) having the sucking unit (110) and the roll mounting portion (142) formed therein, and
a second casing main body (140b) being coupled to the first casing main body (140a) by a vertical hinge so as to horizontally open and close the first casing main body (140a),
wherein the first transportation roller (631, 641) is installed in the first casing main body (140a) and the second transportation roller (632, 642) is installed in the second casing main body (140b), so when the second casing main body (140b) closes the first casing main body (140a), the purification filter is fitted between the first transportation roller (631, 641) and the second transportation roller (632, 642).

14. The portable hood (10) of claim 12 or 13, **characterized in that** the upper casing (150) has a filter discharging hole (151) formed vertically therethrough such that the purification filter moved upward by the filter transportation unit (620) passes through the filter discharging hole (151),
wherein optionally the filter discharging hole (151) has an inclined surface formed on an inner wall surface thereof by inclining toward the discharging unit (120) such that the purification filter is discharged toward the discharging unit (120).

## Patentansprüche

1. Tragbare Abzugshaube (10), **dadurch gekennzeichnet, dass** die tragbare Abzugshaube (10) aufweist:
eine Basiseinheit (200), die auf einem Fundament ruht;
eine Kopfeinheit (100) mit einer Ansaugeinheit (110), in die Luft eingeleitet werden kann, und einer Ausleitungseinheit (120), welche die in die Ansaugeinheit (110) eingeleitete Luft ausleitet;
eine Ständereinheit (300), welche die Kopfeinheit (100) mit der Basiseinheit (200) verbindet, so dass die Kopfeinheit (100) nach oben von der Basiseinheit (200) beabstandet ist;
**dadurch gekennzeichnet, dass**
eine Rollenfiltereinheit (600) in der Kopfeinheit (100) installiert ist und einen Reinigungsfilter aufweist, der in der Lage ist, über die Saugeinheit (110) hinaus zur Außenseite der Kopfeinheit (100) ausgeleitet zu werden,
wobei die Rollenfiltereinheit (600) aufweist:
eine Filterrolle (610), die drehbar in der Kopfeinheit (100) installiert ist, wobei der Reinigungsfilter auf die Filterrolle (610) gewickelt ist, und
eine Filtertransporteinheit (620), die derart in der Kopfeinheit (100) installiert ist, dass sich die Filtertransporteinheit (620) auf einer der Filterrolle (610) gegenüberliegenden Seite befindet, wobei die Saugeinheit (110) zwischen der Filtertransporteinheit (620) und der Filterrolle (610) angeordnet ist, wobei die Filtertransporteinheit (620) derart konfiguriert ist, dass sie den Reinigungsfilter, der sich über die Saugeinheit (110) hinaus erstreckt, von der Filterrolle (610) an einer oberen Seite der Kopfeinheit (100) entlädt.

2. Tragbare Abzugshaube (10) nach Anspruch 1, **dadurch gekennzeichnet, dass** die Kopfeinheit (100) einen Rollenmontageabschnitt (142) aufweist, an dem die Filterrolle (610) lösbar montiert ist.

3. Tragbare Abzugshaube (10) nach Anspruch 2, **dadurch gekennzeichnet, dass** der Rollenmontageabschnitt (142) aufweist:
einen Rollenaufnahmeabschnitt (142a), der an einer unteren Oberfläche der Kopfeinheit (100) nach unten offen ist, wobei die Filterrolle (610) in den Rollenaufnahmeabschnitt (142a) eingesetzt ist, und
einen Achsenkombinationsabschnitt (142b), der an jeder der gegenüberliegenden Innenwandflächen des Rollengehäuseabschnitts (142a) ausgebildet ist,
wobei die Filterrolle (610) aufweist:
eine Filtertrommel (611), auf die der Reinigungsfilter gewickelt ist, und
ein Paar Rollenkombinationskits (612), die jeweils an gegenüberliegenden Seiten der Filtertrommel (611) installiert sind und die Filtertrommel (611) derart stützen, dass die Filtertrommel (611) drehbar ist, wobei die Rollenkombinationskits (612) jeweils lösbar mit den Achsenkombinationsabschnitten (142b) gekoppelt sind, wenn die Filterrolle (610) an dem Rollenmontageabschnitt (142) installiert ist.

4. Tragbare Abzugshaube (10) nach Anspruch 3, **dadurch gekennzeichnet, dass** jedes der Rollenkombinationskits (612) aufweist:
einen Kithauptkörper (613);
einen ersten Achsvorsprung (614), der von einer ersten Seitenfläche des Kithauptkörpers (613) vorsteht und drehbar mit einer Seitenfläche der Filtertrommel (611) gekoppelt ist; und
einen zweiten Achsvorsprung (615), der von einer zweiten Seitenfläche des Kithauptkörpers (613) vorsteht und in den Achsenkombinationsabschnitt (142b) eingesetzt ist.

5. Tragbare Abzugshaube (10) nach Anspruch 4, **dadurch gekennzeichnet, dass**, wenn der zweite Achsvorsprung (615) mit dem Achsenkombinationsabschnitt (142b) gekoppelt ist, der zweite Achsvorsprung (615) in eine Richtung gedrückt wird, in der der zweite Achsvorsprung (615) in den Achskombinationsabschnitt (142b) eingesetzt wird,
wobei optional der Kithauptkörper (613) aufweist:
ein erstes Kitelement (613a);
ein zweites Kitelement (613b), in dem der zweite Achsvorsprung (615) ausgebildet ist und das lösbar mit dem ersten Kitelement (613a) gekoppelt ist; und
ein Druckelement (613c), das zwischen dem ersten Kitelement (613a) und dem zweiten Kitelement (613b) installiert und derart konfiguriert ist, dass es das zweite Kitelement (613b) in eine Richtung drückt, in der der zweite Achsvorsprung (615) in den Achsenkombinationsabschnitt (142b) eingesetzt wird,
wobei das zweite Kitelement (613b) des Kithauptkörpers (613) in Richtung des ersten Kitelements (613a) gedrückt wird, so dass der zweite Achsvorsprung (615) mit dem Achsenkombinationsabschnitt (142b) gekoppelt und von diesem entkoppelt ist.

6. Tragbare Abzugshaube (10) nach einem der Ansprüche 2 bis 5, **dadurch gekennzeichnet, dass** die Filtertransporteinheit (620) aufweist: eine erste Rolleneinheit (630) und eine zweite Rolleneinheit (640), die innerhalb der Kopfeinheit (100) installiert sind, indem sie vertikal voneinander beabstandet sind und derart konfiguriert sind, dass sie den Reinigungsfilter nach oben hin ausleiten.

7. Tragbare Abzugshaube (10) nach Anspruch 6, **dadurch gekennzeichnet, dass** die erste Rolleneinheit (630) und die zweite Rolleneinheit (640) eine erste Transportrolle (631, 641) und eine zweite Transportrolle (632, 642) aufweisen, die derart konfiguriert sind, dass sie sich einander zugewandt in einer horizontalen Richtung drehen, wobei der Reinigungsfilter zwischen der ersten Transportrolle (631, 641) und der zweiten Transportrolle (632, 642) angeordnet ist, um den Reinigungsfilter nach oben zu bewegen.

8. Tragbare Abzugshaube (10) nach Anspruch 7, **dadurch gekennzeichnet, dass** die Filtertransporteinheit (620) ferner eine Schneideeinheit (650) aufweist, die zwischen der ersten Rolleneinheit (630) und der zweiten Rolleneinheit (640) angeordnet ist, wobei die Schneideeinheit (650) derart konfiguriert ist, dass sie den Reinigungsfilter quer schneidet.

9. Tragbare Abzugshaube (10) nach Anspruch 8, **dadurch gekennzeichnet, dass** die Schneideeinheit (650) aufweist:
eine Schneideinrichtung (651), die so konfiguriert ist, dass sie den Reinigungsfilter schneidet, und
eine Schneideinrichtungsbewegungseinheit (652), die derart konfiguriert ist, dass sie die Schneideinrichtung (651) quer hin und her bewegt, so dass der Reinigungsfilter quer geschnitten wird,
wobei optional die Schneideinrichtungsbewegungseinheit (652) aufweist:
einen Riemen (653), auf dem die Schneideinrichtung (651) installiert ist, und
ein Paar Riemenscheiben (654), die derart konfiguriert sind, dass sie Vorwärts- und Rückwärtsdrehungen ausführen, so dass sich das auf dem Riemen (653) installierte Messer (651) hin und her bewegt.

10. Tragbare Abzugshaube (10) nach einem der Ansprüche 8 bis 9, **dadurch gekennzeichnet, dass** die Kopfeinheit (100) aufweist:
einen Kopfhauptkörper (130), der die Saugeinheit (110), die Ausleitungseinheit (120) und den darin ausgebildeten Rollenmontageabschnitt (142) aufweist, wobei die Saugeinheit (110) und die Ausleitungseinheit (120) in einer horizontalen Richtung exzentrisch ausgebildet sind; und
einen Strömungspfadabschnitt (170), der in dem Kopfhauptkörper (130) vorgesehen ist, wobei Luft, die durch die Ansaugeinheit (110) eingeleitet wird, durch den Strömungspfadabschnitt (170) zu der Ausleitungseinheit (120) strömt,
wobei, wenn die Saugeinheit (110) zwischen der Filterrolle (610) und der Filtertransporteinheit (620) angeordnet ist, die Filterrolle (610) und die Filtertransporteinheit (620) jeweils auf gegenüberliegenden Seiten der exzentrischen Richtung der Saugeinheit (110) und der Ausleitungseinheit (120) installiert sind, so dass die Filterrolle (610) auf einer Seite der Ausleitungseinheit (120) installiert ist.

11. Tragbare Abzugshaube (10) nach Anspruch 10, **dadurch gekennzeichnet, dass** die Filterrolle (610) derart an dem Rollenmontageabschnitt (142) montiert ist, dass der auf die Filterrolle (610) gewickelte Reinigungsfilter in einer Richtung abgewickelt wird, die einen unteren Teil des Kopfhauptkörpers (130) abdeckt und sich zu einem unteren Teil der Ansaugeinheit (110) erstreckt, wobei sich der Reinigungsfilter nach der Bewegung an der Saugeinheit (110) vorbei nach oben biegt und sich in Richtung der Filtertransporteinheit (620) bewegt.

12. Tragbare Abzugshaube (10) nach Anspruch 11, **dadurch gekennzeichnet, dass** der Kopfhauptkörper (130) aufweist:
einen Gehäusehauptkörper (140), der mit der Saugeinheit (110) und dem Rollenmontageabschnitt (142) versehen ist und in dem die Filtertransporteinheit (620) installiert ist;
ein oberes Gehäuse (150), das die Ausleitungseinheit (120) aufweist und von einer Oberseite des Gehäusehauptkörpers (140) aus mit dem Gehäusehauptkörper (140) gekoppelt ist; und
ein unteres Gehäuse (160) mit einem Durchgangsloch, das vertikal durch dieses hindurch ausgebildet ist, so dass sich das Durchgangsloch an einer Position befindet, die der Saugeinheit (110) entspricht, wobei das untere Gehäuse (160) mit dem Gehäusehauptkörper (140) von einer Unterseite des Gehäusehauptkörpers (140) aus gekoppelt ist, um den Rollenmontageabschnitt (142) zu schützen.

13. Tragbare Abzugshaube (10) nach Anspruch 12, **dadurch gekennzeichnet, dass** der Gehäusehauptkörper (140) aufweist:
einen ersten Gehäusehauptkörper (140a), der die Saugeinheit (110) und den darin ausgebildeten Rollenmontageabschnitt (142) aufweist, und
einen zweiten Gehäusehauptkörper (140b), der mit dem ersten Gehäusehauptkörper (140a) über ein vertikales Scharnier gekoppelt ist, um den ersten Gehäusehauptkörper (140a) horizontal zu öffnen und zu schließen,
wobei die erste Transportrolle (631, 641) in dem ersten Gehäusehauptkörper (140a) installiert ist und die zweite Transportrolle (632, 642) in dem zweiten Gehäusehauptkörper (140b) installiert ist, so dass, wenn der zweite Gehäusehauptkörper (140b) den ersten Gehäusehauptkörper (140a) schließt, der Reinigungsfilter zwischen der ersten Transportrolle (631, 641) und der zweiten Transportrolle (632, 642) eingepasst wird.

14. Tragbare Abzugshaube (10) nach Anspruch 12 oder 13, **dadurch gekennzeichnet, dass** das obere Gehäuse (150) ein Filterausleitungsloch (151) aufweist, das vertikal durch es hindurch ausgebildet ist, so dass der Reinigungsfilter, der von der Filtertransporteinheit (620) nach oben bewegt wird, durch das Filterausleitungsloch (151) hindurchgeht,
wobei optional das Filterausleitungsloch (151) eine geneigte Oberfläche aufweist, die an einer Innenwandoberfläche davon durch Neigen in Richtung der Ausleitungseinheit (120) ausgebildet ist, so dass der Reinigungsfilter in Richtung der Ausleitungseinheit (120) ausgeleitet wird.

## Revendications

1. Hotte portative (10), **caractérisée en ce que** la hotte portative (10) comprend :
une unité de base (200) reposant sur une fondation ;
une unité de tête (100) présentant une unité d'aspiration (110) permettant l'introduction de l'air dans celle-ci et une unité de décharge (120) déchargeant l'air introduit dans l'unité d'aspiration (110) ;
une unité de montant (300) reliant l'unité de tête (100) à l'unité de base (200) de telle sorte que l'unité de tête (100) est espacée vers le haut de l'unité de base (200) ; **caractérisée en ce qu'**une unité de filtre à rouleaux (600) est installée dans l'unité de tête (100) et présente un filtre de purification capable d'être déchargé au-delà de l'unité d'aspiration (110) vers l'extérieur de l'unité de tête (100),
dans laquelle l'unité de filtre à rouleaux (600) comprend :
un rouleau filtrant (610) installé de manière rotative dans l'unité de tête (100) avec le filtre de purification enroulé sur le rouleau filtrant (610), et
une unité de transport de filtre (620) installée dans l'unité de tête (100) de telle sorte que l'unité de transport de filtre (620) est située sur un côté opposé au rouleau filtrant (610) avec l'unité d'aspiration (110) placée entre l'unité de transport de filtre (620) et le rouleau filtrant (610), l'unité de transport de filtre (620) étant configurée pour décharger le filtre de purification s'étendant au-delà de l'unité d'aspiration (110) depuis le rouleau filtrant (610) à un côté supérieur de l'unité de tête (100).

2. Hotte portative (10) selon la revendication 1, **caractérisée en ce que** l'unité de tête (100) comprend une partie de montage de rouleau (142) sur laquelle le rouleau filtrant (610) est monté de manière amovible.

3. Hotte portative (10) selon la revendication 2, **caractérisée en ce que** la partie de montage de rouleau (142) comprend :
une partie de logement de rouleau (142a) ouverte vers le bas sur une surface inférieure de l'unité de tête (100), le rouleau filtrant (610) étant inséré dans la partie de logement de rouleau (142a), et
une partie de combinaison d'arbre (142b) formée sur chacune de surfaces de paroi intérieure opposées de la partie de logement de rouleau (142a),
dans laquelle le rouleau filtrant (610) comprend :
un tambour filtrant (611), sur lequel le filtre de purification est enroulé, et
une paire d'ensembles de combinaison de rouleaux (612) installée sur des côtés opposés du tambour filtrant (611), respectivement et supportant le tambour filtrant (611) de telle sorte que le tambour filtrant (611) est rotatif, les ensembles de combinaison de rouleaux (612) étant couplés de manière amovible aux parties de combinaison d'arbre (142b) respectivement lorsque le rouleau filtrant (610) est installé sur la partie de montage de rouleau (142).

4. Hotte portative (10) selon la revendication 3, **caractérisée en ce que** chacun des ensembles de combinaison de rouleaux (612) comprend :
un corps principal d'ensemble (613) ;
une première partie faisant saillie d'arbre (614) faisant saillie depuis une première surface latérale du corps principal d'ensemble (613) et couplée de manière rotative à une surface latérale du tambour filtrant (611) ; et
une deuxième partie faisant saillie d'arbre (615) faisant saillie depuis une deuxième surface latérale du corps principal d'ensemble (613) et insérée dans la partie de combinaison d'arbre (142b).

5. Hotte portative (10) selon la revendication 4, **caractérisée en ce que** lorsque la deuxième partie faisant saillie d'arbre (615) est couplée à la partie de combinaison d'arbre (142b), la deuxième partie faisant saillie d'arbre (615) est pressée dans une direction, dans laquelle la deuxième partie faisant saillie d'arbre (615) est insérée dans la partie de combinaison d'arbre (142b),
dans laquelle en option le corps principal d'ensemble (613) comprend :
un premier élément d'ensemble (613a) ;
un deuxième élément d'ensemble (613b) présentant la deuxième partie faisant saillie d'arbre (615) formée dans celui-ci et couplé de manière amovible au premier élément d'ensemble (613a) ; et
un élément de pression (613c) installé entre le premier élément d'ensemble (613a) et le deuxième élément d'ensemble (613b) et configuré pour presser le deuxième élément d'ensemble (613b) dans une direction, dans laquelle la deuxième partie faisant saillie d'arbre (615) est insérée dans la partie de combinaison d'arbre (142b),
dans laquelle le deuxième élément d'ensemble (613b) du corps principal d'ensemble (613) est poussé vers le premier élément d'ensemble (613a) de telle sorte que la deuxième partie faisant saillie d'arbre (615) est couplée à et découplée de la partie de combinaison d'arbre (142b).

6. Hotte portative (10) selon l'une quelconque des revendications 2 à 5, **caractérisée en ce que** l'unité de transport de filtre (620) comprend : une première unité de rouleaux (630) et une deuxième unité de rouleaux (640) installées à l'intérieur de l'unité de tête (100) tout en étant espacées verticalement l'une de l'autre et configurées pour décharger le filtre de purification vers le haut.

7. Hotte portative (10) selon la revendication 6, **caractérisée en ce que** la première unité de rouleaux (630) et la deuxième unité de rouleaux (640) comprennent un premier rouleau de transport (631, 641) et un deuxième rouleau de transport (632, 642) configurés pour tourner en se faisant face l'un l'autre dans une direction horizontale avec le filtre de purification placé entre le premier rouleau de transport (631, 641) et le deuxième rouleau de transport (632, 642) de manière à déplacer le filtre de purification vers le haut.

8. Hotte portative (10) selon la revendication 7, **caractérisée en ce que** l'unité de transport de filtre (620) comprend en outre une unité de découpage (650) située entre la première unité de rouleau (630) et la deuxième unité de rouleau (640), l'unité de découpage (650) étant configurée pour découper transversalement le filtre de purification.

9. Hotte portative (10) selon la revendication 8, **caractérisée en ce que** l'unité de découpage (650) comprend :
un couteau (651) configuré pour découper le filtre de purification, et
une unité de déplacement de couteau (652) configurée pour déplacer en va-et-vient transversalement le couteau (651) de telle sorte que le filtre de purification est découpé transversalement,
dans laquelle en option l'unité de déplacement de couteau (652) comprend :
une courroie (653) sur laquelle le couteau (651) est installé, et
une paire de poulies (654) configurée pour réaliser des rotations vers l'avant et inversées de telle sorte que le couteau (651) installé sur la courroie (653) se déplace en va-et-vient.

10. Hotte portative (10) selon l'une quelconque des revendications 8 à 9, **caractérisée en ce que** l'unité de tête (100) comprend :
un corps principal de tête (130) présentant l'unité d'aspiration (110), l'unité de décharge (120), et la partie de montage de rouleau (142) formée dans celle-ci, l'unité d'aspiration (110) et l'unité de décharge (120) étant formées de manière excentrique dans une direction horizontale, et
une partie de trajet d'écoulement (170) prévue dans le corps principal de tête (130), de l'air introduit à travers l'unité d'aspiration (110) s'écoulant vers l'unité de décharge (120) à travers la partie de trajet d'écoulement (170),
dans laquelle avec l'unité d'aspiration (110) placée entre le rouleau filtrant (610) et l'unité de transport de filtre (620), le rouleau filtrant (610) et l'unité de transport de filtre (620) sont installés sur des côtés opposés respectivement de la direction excentrique de l'unité d'aspiration (110) et de l'unité de décharge (120) de telle sorte que le rouleau filtrant (610) est installé sur un côté de l'unité de décharge (120).

11. Hotte portative (10) selon la revendication 10, **caractérisée en ce que** le rouleau filtrant (610) est monté sur la partie de montage de rouleau (142) de telle sorte que le filtre de purification enroulé sur le rouleau filtrant (610) est déroulé dans une direction couvrant une partie inférieure du corps principal de tête (130) et s'étend vers une partie inférieure de l'unité d'aspiration (110), dans laquelle le filtre de purification se plie vers le haut après le déplacement au-delà de l'unité d'aspiration (110) et se déplace vers l'unité de transport de filtre (620).

12. Hotte portative (10) selon la revendication 11, **caractérisée en ce que** le corps principal de tête (130) comprend :
un corps principal de boîtier (140) prévu avec l'unité d'aspiration (110) et la partie de montage de rouleau (142) et présentant l'unité de transport de filtre (620) installée dans celui-ci ;
un boîtier supérieur (150) présentant l'unité de décharge (120) et couplé au corps principal de boîtier (140) depuis un côté supérieur du corps principal de boîtier (140) ; et
un boîtier inférieur (160) présentant un trou traversant formé verticalement au travers de telle sorte que le trou traversant est situé sur un emplacement correspondant à l'unité d'aspiration (110), le boîtier inférieur (160) étant couplé au corps principal de boîtier (140) depuis un côté inférieur du corps principal de boîtier (140) de manière à protéger la partie de montage de rouleau (142).

13. Hotte portative (10) selon la revendication 12, **caractérisée en ce que** le corps principal de boîtier (140) comprend :
un premier corps de boîtier principal (140a) présentant l'unité d'aspiration (110) et la partie de montage de rouleau (142) formée dans celle-ci, et
un deuxième corps principal de boîtier (140b) couplé au premier corps principal de boîtier (140a) par une charnière verticale de manière à ouvrir et fermer horizontalement le premier corps principal de boîtier (140a),
dans laquelle le premier rouleau de transport (631, 641) est installé dans le premier corps principal de boîtier (140a) et le deuxième rouleau de transport (632, 642) est installé dans le deuxième corps principal de boîtier (140b) de telle sorte que lorsque le deuxième corps principal de boîtier (140b) ferme le premier corps principal de boîtier (140a), le filtre de purification est ajusté entre le premier rouleau de transport (631, 641) et le deuxième rouleau de transport (632, 642).

14. Hotte portative (10) selon la revendication 12 ou 13, **caractérisée en ce que** le boîtier supérieur (150) présente un trou de décharge de filtre (151) formé verticalement au travers de telle sorte que le filtre de purification déplacé vers le haut par l'unité de transport de filtre (620) passe à travers le trou de décharge de filtre (151),
dans laquelle en option le trou de décharge de filtre (151) présente une surface inclinée formée sur une surface de paroi intérieure de celui-ci par inclinaison vers l'unité de décharge (120) de telle sorte que le filtre de purification est déchargé vers l'unité de décharge (120).
